# EUROPÄISCHE PATENTSCHRIFT

(11) **EP 1 728 422 B1**
(45) Veröffentlichungstag und Bekanntmachung des Hinweises auf die Patenterteilung: **26.12.2007**
(21) Anmeldenummer: 06011394.1
(22) Anmeldetag: 01.06.2006
(51) Int. Cl.: A01K 39/012

(54) **Futtertrog für Geflügel**
Poultry feeder
Mangeoire pour volaille

(30) Priorität: 02.06.2005 DE 102005025458
(43) Veröffentlichungstag der Anmeldung: 06.12.2006
(73) Patentinhaber: LAE-Anlagenbau GmbH, 27472 Cuxhaven (DE)
(72) Erfinder:
(74) Vertreter: Solf, Alexander

(56) Entgegenhaltungen:
- EP-A- 0 815 726
- US-A- 5 927 232
- US-B1- 6 532 895

## Beschreibung

Die vorliegende Erfindung betrifft einen Futtertrog für Geflügel zur Verwendung in Verbindung mit einem Röhrenfütterungssystem.

Derartige Futtertröge bestehen im wesentlichen aus einer Bodenschale und einem mittig über der Bodenschale angeordneten und an dieser befestigten Fütterkegel, der derart - gegebenenfalls über ein Fallrohr - mit einem Förderrohr des Röhrenfütterungssystems verbunden ist, dass von dem Röhrenfütterungssystem angeliefertes Futter durch eine in dem Förderrohr vorgesehene Auslassöffnung in das Fallrohr und den Fütterkegel und von diesem in die Bodenschale fließt. Zur Reinigung oder Demontage werden die Futtertröge üblicherweise um eine Mittelachse des Förderrohrs geschwenkt, so dass sie mehr oder weniger horizontal zur Seite raushängen. In dieser Position können sie bequem mit einem Dampfstrahler oder dergleichen gereinigt werden. Ist eine gleichzeitige Drehung aller an demselben Förderrohr hängenden Futtertröge erforderlich, erfolgt die Drehung des Futtertroges dabei zweckmäßigerweise durch Drehen des Förderrohres, wobei der Futtertrog mit dem Förderrohr fest verbunden ist. Dabei werden folglich auch die Auslassöffnungen des Förderrohres mitgedreht. Dadurch kann beim Waschen des Futtertroges leicht Wasser oder Reinigungsmittel durch die Auslassöffnungen in das Förderrohr und somit an das sich in der Förderröhre befindliche Futter dringen.

Um dies zu verhindern ist aus der DE 600 03 638 T2 bekannt, zur Befestigung des Futtertroges am Förderrohr am oberen Ende des Fütterkegels ein nach unten und oben offenes Greifelement in Form einer Längsrinne mit einer zylindrischen Aufnahmeöffnung und elastisch federnden Seitenteilen anzuordnen, die das Förderrohr umgreifen. Seitlich des Greifelements ist auf der einen Seite eine Verriegelungsschelle und auf der zweiten Seite eine Antriebsschelle auf dem Förderrohr angeordnet und mit diesem fest verbunden, so dass das Greifelement axial unverschieblich aber frei drehbar, also pendelnd auf dem Förderrohr gelagert ist. Das Pendeln ist aus dem Grund wünschenswert, da bei einer großen Anzahl von Geflügel und dem damit verbundenen Gedränge der Futtertrog den Tieren ausweicht, so dass keine Verletzungsgefahr besteht.

Des weiteren weist das Greifelement auf der zweiten Seite einen unterhalb der Aufnahmeöffnung angeordneten und von dem Greifelement parallel zur Mittelachse weggerichteten Antriebsstift auf. An der Antriebsschelle ist dazu korrespondierend ein radial nach außen von der Schelle weg gerichteter Antriebsarm vorgesehen, der sich zunächst in Fütterungsstellung, in der der Futtertrog vertikal von dem Förderrohr nach unten weghängt, im wesentlichen horizontal zur Seite erstreckt. Um den Futtertrog in die Waschstellung zu schwenken, wird gemäß der DE 600 03 638 T2 zunächst das Förderrohr und mit diesem die Antriebsschelle um eine Vierteldrehung gedreht, bis der Antriebsarm an dem Antriebsstift des Greifelements anliegt. In dieser Position liegt das Auslassloch einem Seitenteil des Greifelements gegenüber und wird von einer Innenwandung der Aufnahmeöffnung verschlossen, so dass keine Verbindung mehr von dem Förderrohr zu dem Fütterkegel besteht. Bei weiterer Drehung des Förderohres wird der Futtertrog durch den am Antriebsstift angreifenden Antriebsarm der Antriebsschelle mitgenommen und in ihre horizontale Waschstellung gedreht. Dabei bleibt die Auslassöffnung weiterhin verschlossen, so dass beim Waschen kein Waschwasser in das Förderrohr eindringt.

Des weiteren weist das Greifelement an seiner zweiten, der Antriebsschelle zugewandten, Seite einen ebenfalls zum Antriebsarm korrespondierenden Antriebsschlitz auf. Um den Futtertrog auf dem Förderrohr zu arretieren, wird gemäß der DE 600 03 638 T2 die Antriebsschelle derart auf dem Förderrohr angeordnet, dass der Antriebsarm dem Antriebsschlitz gegenüberliegt und durch Verschieben in den Schlitz hinein mit diesem in Eingriff gebracht wird. In dieser Stellung sind Futtertrog und Förderrohr über die Antriebsschelle miteinander gekoppelt, so dass der Futtertrog bei Drehung des Förderrohres direkt mitgeschleppt wird. Zudem wird das freie Pendeln des Futtertroges verhindert, was insbesondere bei einer nicht so großen Anzahl von Geflügel gewünscht ist, damit das Geflügel das Futter aus dem Futtertrog nicht auskippen kann, da dieser immer gerade nach unten hängt.

Allerdings ist bei dem beschriebenen Futtertrog von Nachteil, dass das Förderrohr über seinen gesamten Umfang geführt wird, was die Drehung des Rohres aufgrund von Reibung erschwert. Zudem ist der beschriebene Futtertrog relativ aufwendig aufgebaut aufgrund der vielen Bauteile, was auch die Montage erschwert.

Aufgabe der vorliegenden Erfindung ist die Bereitstellung eines Futtertroges für Geflügel zur Verwendung in Verbindung mit einem Röhrenfütterungssystem, der einfach aufgebaut und leicht zu montieren ist und der derart mit dem Förderrohr gekoppelt ist, dass der Futtertrog durch Drehen des Förderrohres in eine Waschstellung gebracht wird, in der beim Waschen kein Waschwasser ins Förderrohr eindringt.

Diese Aufgabe wird durch die Merkmale des Anspruchs 1 gelöst. Vorteilhafte Weiterbildungen der Erfindung werden in den Unteransprüchen gekennzeichnet.

Im Folgenden wird die Erfindung anhand der Zeichnung beispielhaft näher erläutert.

Es zeigen:
Fig.1: eine perspektivische Ansicht eines Fallrohres des erfindungsgemäßen Futtertroges
Fig.2: einen Mittenlängsschnitt durch das Fallrohr gemäß Fig.1
Fig.3: einen Mittenquerschnitt durch das Fallrohr gemäß Fig.1
Fig.4: eine Seitenansicht des Fallrohres gemäß Fig. 1
Fig.5: eine Draufsicht des Fallrohres gemäß Fig. 1
Fig.6: eine Unteransicht des Fallrohres gemäß Fig. 1
Fig.7: eine perspektivische Ansicht eines Aufnahmeeinrichtungsdeckels einer Förderrohraufnahmeeinrichtung des erfindungsgemäßen Futtertroges
Fig.8: eine Vorderansicht des Aufnahmeeinrichtungsdeckels gemäß Fig. 7
Fig.9: eine Draufsicht des Aufnahmeeinrichtungsdeckels gemäß Fig. 7
Fig.10: eine Unteransicht des Aufnahmeeinrichtungsdeckels gemäß Fig. 7
Fig.11: eine Seitenansicht des Aufnahmeeinrichtungsdeckels gemäß Fig.7
Fig.12: einen Mittenlängsschnitt des Aufnahmeeinrichtungsdeckels gemäß Fig.7
Fig.13: einen Mittenquerschnitt des Aufnahmeeinrichtungsdeckels gemäß Fig.7
Fig.14: eine Vorderansicht eines Schellenverschlussteils des erfindungsgemäßen Futtertroges
Fig.15: eine Seitenansicht des Schellenverschlussteils gemäß Fig.14
Fig.16: eine Draufsicht des Schellenverschlussteils gemäß Fig.14
Fig.17: eine perspektivische Ansicht eines Schellenunterteils des erfindungsgemäßen Futtertroges
Fig.18: eine Seitenansicht des Schellenunterteils gemäß Fig.17
Fig.19: eine Draufsicht des Schellenunterteils gemäß Fig.17
Fig.20: eine Unteransicht des Schellenunterteils gemäß Fig.17
Fig.21: einen Mittenquerschnitt des Schellenunterteils gemäß Fig.17
Fig.22: eine Vorderansicht des Schellenunterteils gemäß Fig.17
Fig.23: einen Mittenlängsschnitt durch einen auf einem Förderrohr angeordneten erfindungsgemäßen Futtertrog
Fig.24: einen Mittenquerschnitt durch einen auf dem Förderrohr angeordneten erfindungsgemäßen Futtertrog
Fig.25: einen Ausschnitt des Mittenlängsschnitts gemäß Fig.23 im Bereich der Förderrohraufnahmeeinrichtung
Fig.26: einen Ausschnitt des Mittenquerschnitts gemäß Fig.24 im Bereich der Förderrohraufnahmeeinrichtung
Fig.27: eine perspektivische, schematische Ansicht des Futtertroges ohne Kupplungsschelle und erfindungsgemäße Förderrohraufnahmeeinrichtung

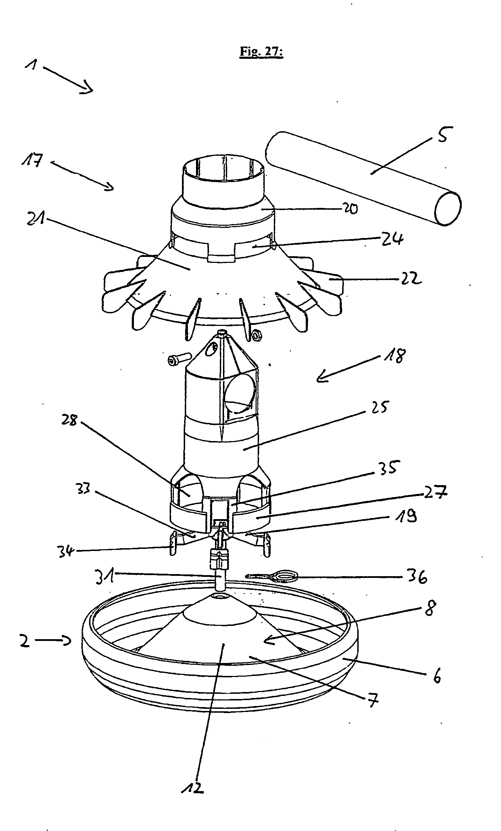

Der erfindungsgemäße Futtertrog 1 weist eine im Wesentlichen tellerförmige Bodenschale 2, eine zentral bzw. mittig über der Bodenschale 2 angeordnete und mit dieser vorzugsweise vertikal verschieblich in Verbindung stehende Futterleiteinrichtung 3 und eine Kupplungsschelle 4 auf, über die die Futterleiteinrichtung 3 mit einem Förderrohr 5 eines Röhrenfüttersystems (nicht dargestellt) verbunden ist (Fig.23,24 und 27).

Die Bodenschale 2 dient zur Aufnahme von Futter und besteht im Wesentlichen aus einer aufrechtstehenden, im Wesentlichen vertikal nach oben gerichteten Umfangswandung 6 und aus einer Bodenwandung 7 mit einer Bodenwandungsober- bzw. -innenfläche 8 und einer Bodenwandungsunter- bzw. -außenfläche 9. Außerdem weist die Bodenwandung 7 eine konkave Bodenwandungsrinne bzw. Futtermulde 10 auf, über die die Bodenwandung 7 von der Umfangswandung 6 in einen konisch bzw. kegelförmig nach oben gerichteten und auf eine vertikale, zentrale Futtertrogmittelachse 11 des gesamten Futtertroges 1 zulaufenden Futterrutschkegel 12 übergeht.

Bei der Fütterung liegt der Futtertrog 1 zweckmäßigerweise mit der konkaven Bodenwandungsrinne 10 auf einem Erd- bzw. Hallenboden 13 auf.

Des Weiteren ist die Bodenwandung 7 am oberen Ende des Futterrutschkegels 12 nach innen unten eingestülpt, so dass eine vertikal nach unten und zweckmäßigerweise konzentrisch zur Futtertrogmittelachse 11 ausgerichtete Aufnahmehülse (nicht dargestellt) mit einem oberen Anlaufbund 14a an der oberen Öffnung und einem unteren Anlaufbund 14b an der unteren Öffnung gebildet wird. Die Aufnahmehülse ist vorzugsweise einstückig mit dem Futterrutschkegel 12 verbunden. Zweckmäßigerweise sind zur Stabilisierung der Verbindung von Aufnahmehülse 14 und Futterrutschkegel 12 zusätzlich Versteifungsrippen 15 zwischen der Bodenwandungsunterfläche 9 und einer Hülsenaußenwandung (nicht dargestellt) vorgesehen, wobei die Versteifungsrippen 15 vorzugsweise ebenfalls einstückig mit der Aufnahmehülse und dem Futterrutschkegel 12 verbunden sind.

Des Weiteren besteht die Bodenschale 2 vorzugsweise aus Kunststoff, bevorzugt einem Hartkunststoff, wie zum Beispiel HDPE und/oder PE und wird vorzugsweise durch Gießen, bevorzugt Druckgießen oder Spritzgießen hergestellt.

Die Futterleiteinrichtung 3 des erfindungsgemäßen Futtertroges 1 weist einen mittig bzw. zentral über der Bodenschale 2 angeordneten Trogtrichter 17, ein innerhalb des Trogtrichters 17 und ebenfalls mittig bzw. zentral über der Bodenschale 2 angeordnetes Fallrohr 18 und ein innerhalb des Trogtrichters 17 angeordnetes und mit diesem in fester Verbindung stehendes Raum- bzw. Verbindungsstabwerk 19 auf. Zudem ist das Fallrohr 18 auf dem Raumstabwerk 19 vertikal verschieblich gelagert, so dass das Fallrohr 18 über das Raumstabwerk 19 mit dem Trogtrichter 17 vertikal verschieblich in Verbindung steht.

Der Trogtrichter 17 der Futterleiteinrichtung 3 weist ein Trichterführungsrohr 20 und einen sich daran in vertikaler Richtung nach unten anschließenden Futterleitkegel 21 auf, an dessen unterem Ende um den gesamten Umfang vorzugsweise gleichmäßig verteilt an sich bekannte Scharrflügel 22 angeordnet sind, die verhindern, dass das ausgewachsene Geflügel bei niedrigem Pegelstand des Futters in die Bodenschale 2 einsteigt und das Futter verscharrt und durch Kot etc. verunreinigt. Zudem sind in einem Übergangsbereich von Futterleitkegel 21 zu Trichterführungsrohr 20 sich in Umfangsrichtung erstreckende und gleichmäßig verteilte Futterzuführfenster 24 vorgesehen, auf deren Funktion weiter unten näher eingegangen wird. Die Steigung des Futterleitkegels 21 entspricht dabei in etwa der Steigung des Futterrutschkegels 12, so dass im zusammengebauten Zustand des Futtertroges 1 zwischen der Bodenwandungsoberseite 8 und einer Futterleitkegelunterseite 29 ein Ringspalt 30 gebildet wird.

Das Fallrohr 18 der Futterleiteinrichtung 3 weist analog zum Trogtrichter 17 ebenfalls ein Fallrohrführungsrohr 25 auf, an das sich in vertikaler Richtung nach oben eine Förderrohraufnahmeeinrichtung 26 anschließt. Am unteren Ende des Fallrohrführungsrohres 25 sind zudem sich in Umfangsrichtung erstreckende Schließsegmente 27 und darüber Futterzuführöffnungen 28 vorgesehen.

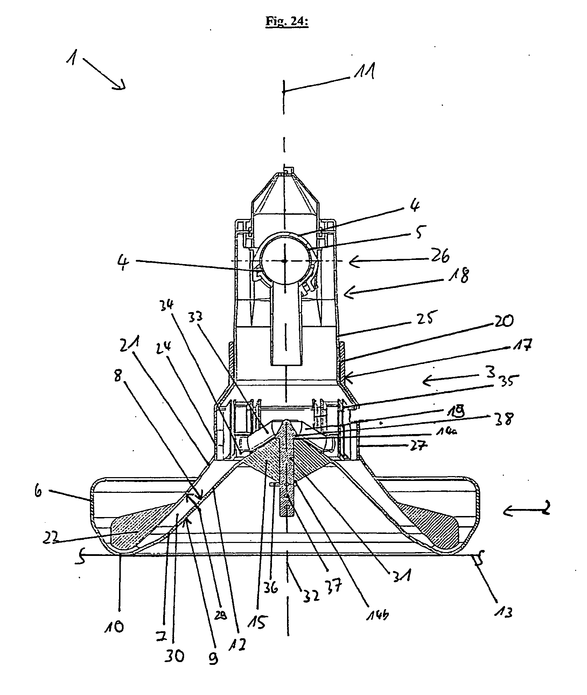

Die Schließsegmente 27, die Futterzuführöffnungen 28 und die im Trogtrichter 17 vorgesehenen Futterzuführfenster 24 dienen dazu, einen unterschiedlich hohen Futterpegel in der Bodenschale 2 für die Fütterung von ausgewachsenem (kleiner Futterpegel) und jungem Geflügel (hoher Futterpegel) einzustellen. Dabei sind wahlweise in einer unteren Stellung (nicht dargestellt) des Fallrohres 18 bezüglich des Trogtrichters 17 die Futterzuführöffnungen 28 den Futterzuführfenstern 24 gegenüberliegend angeordnet, so dass das Futter durch die Futterzuführöffnungen 28 und die Futterzuführfenster 24 in die Bodenschale 2 fließt und ein hoher Futterpegel erzeugt wird, oder in einer oberen Stellung (Fig.23 und 24) des Fallrohres 18 bezüglich des Trogtrichters 17 die Futterzuführfenster 24 von den Schließsegmenten 27 verschlossen, so dass das Futter nur durch den zwischen Futterleitkegelunterseite 29 und Bodenwandungsoberfläche 8 gebildeten Ringspalt 30 in die Bodenschale 2 fließt, wodurch ein niedriger Futterpegel erzielt wird.

Zur vertikal verschieblichen Verbindung von Futterleiteinrichtung 3 und Bodenschale 2 und von Trogtrichter 17 und Fallrohr 18 weist das Raumstabwerk 19 einen vertikal nach unten gerichteten, zentralen Mittelstab 31 mit einer Mittelstabachse 32 und mehrere, vorzugsweise vier, sich von dem Mittelstab 31 im Wesentlichen radial nach außen und unten erstreckende, kreuzweise angeordnete Stützstäbe 33 auf, an denen außenendseitig im Wesentlichen zylinderwandungssegmentförmige Führungsklötze 34 vorgesehen sind.

Diese Führungsklötze 34 sind mit ihren Außenwandungen mit einer Trichterinnenwandung 17a in einem unteren Bereich des Trichterführungsrohres fest verrastet, so dass der Trogtrichter 17 mit dem Raumstabwerk 19 fest verbunden ist. Auf den Führungsklötzen 34 ist weiterhin das Fallrohr 18 mit an einem unteren Ende des Fallrohrführungsrohres 25 vorgesehenen, sich vertikal erstreckenden, paarweisen Führungsbalken 35 vertikal verschieblich geführt.

Zudem ist der Mittelstab 31 des Raumstabwerkes 19 in die Aufnahmehülse 14 der Bodenschale 2 eingeführt. Dabei ist der Betrag, um den Futterleiteinrichtung 3 und Bodenschale 2 zueinander verschieblich sind, begrenzt. Nach oben ist die Futterleiteinrichtung 3 durch einen Splint 36 gesichert, der in im Mittelstab 31 vorgesehene, senkrecht zur Mittelstabachse 32 angeordnete Durchgangsbohrungen 37 eingeführt ist und an dem unteren Anschlagbund 14b der Aufnahmehülse 14 anschlägt. Als unterer Anschlag dient ein am oberen Ende des Mittelstabes 31 angeordneter Mittelstabanschlagbund 38, der an dem oberen Anschlagbund 14a der Aufnahmehülse 14 anschlägt.

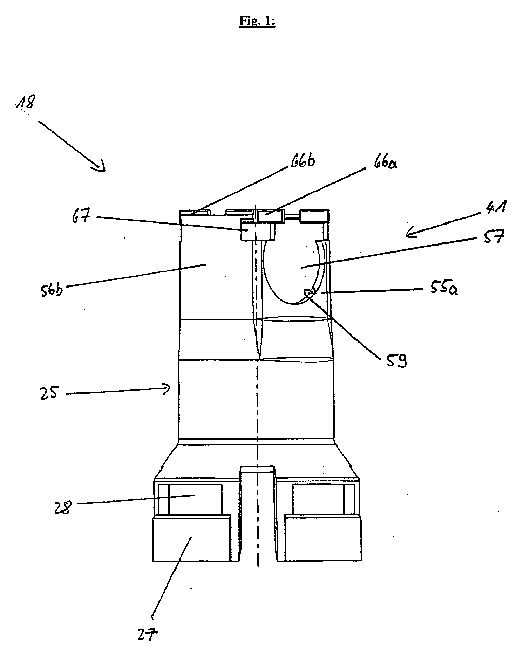

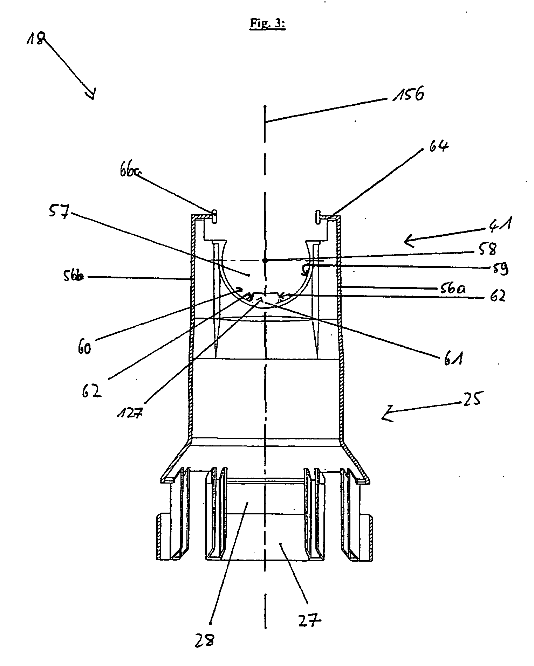

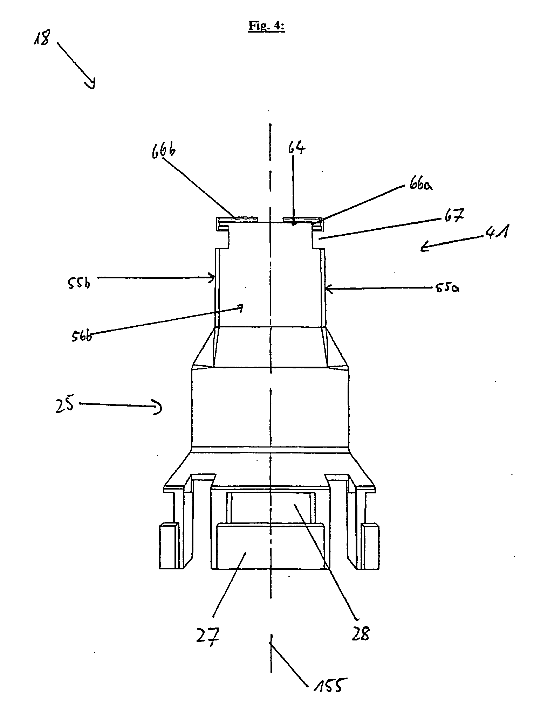

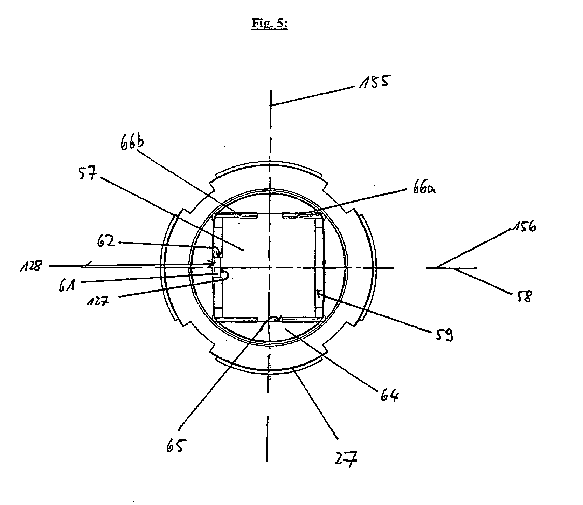

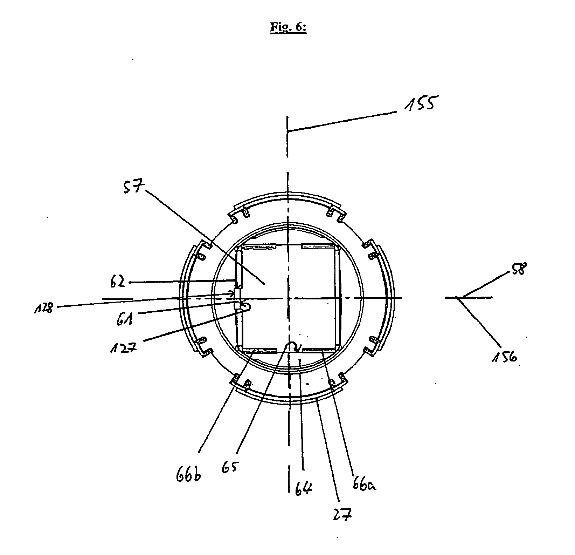

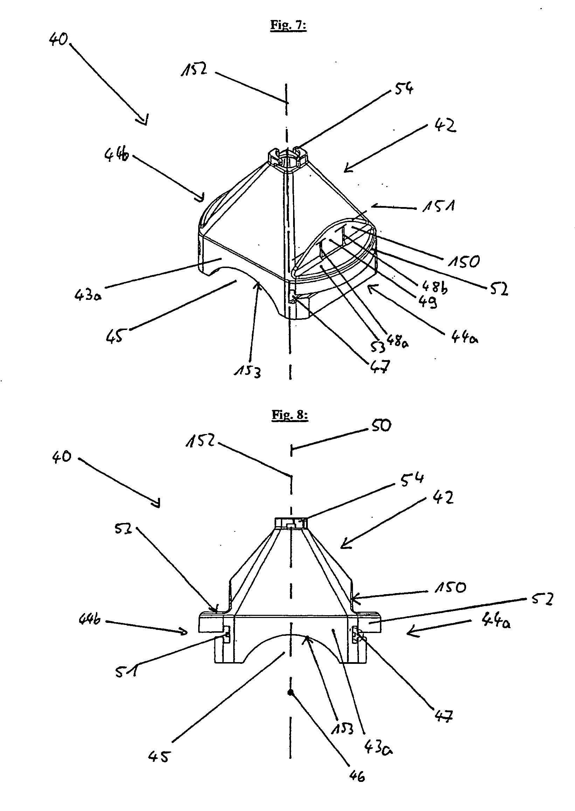

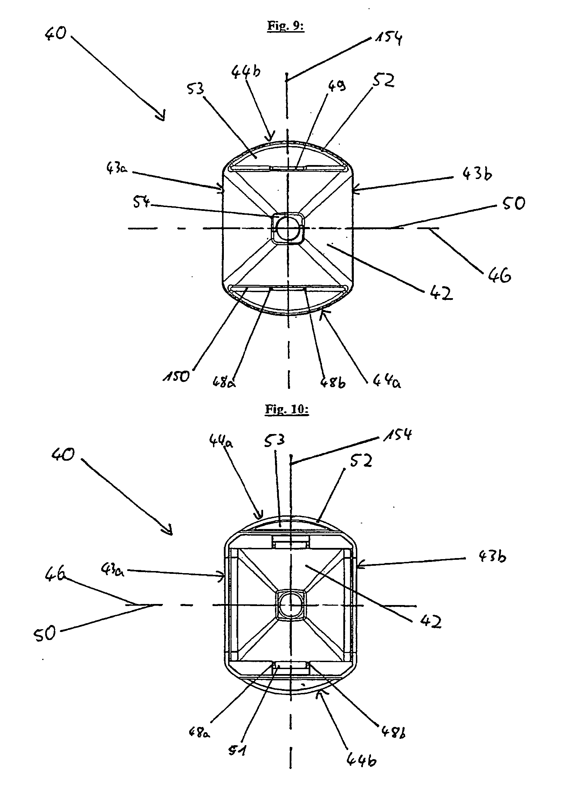

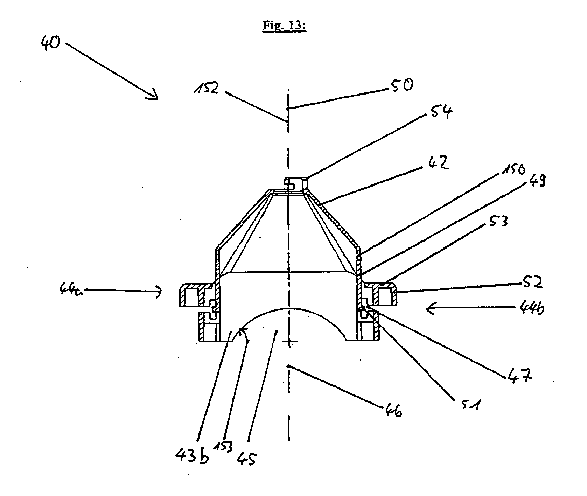

Im folgenden wird die am oberen Ende des Fallrohres 18 angeordnete Förderrohraufnahmeeinrichtung 26 des erfindungsgemäßen Futtertroges 1 anhand der Fig. 1 bis 13 beispielhaft näher erläutert.

Die Förderrohraufnahmeeinrichtung 26 ist zweiteilig ausgebildet und weist einen oberen Aufnahmeeinrichtungsdeckel 40 und einen unteren Fallrohraufnahmebereich 41 auf, der sich in vertikaler Richtung nach oben einstückig an das Fallrorhrführungsrohr 25 anschließt.

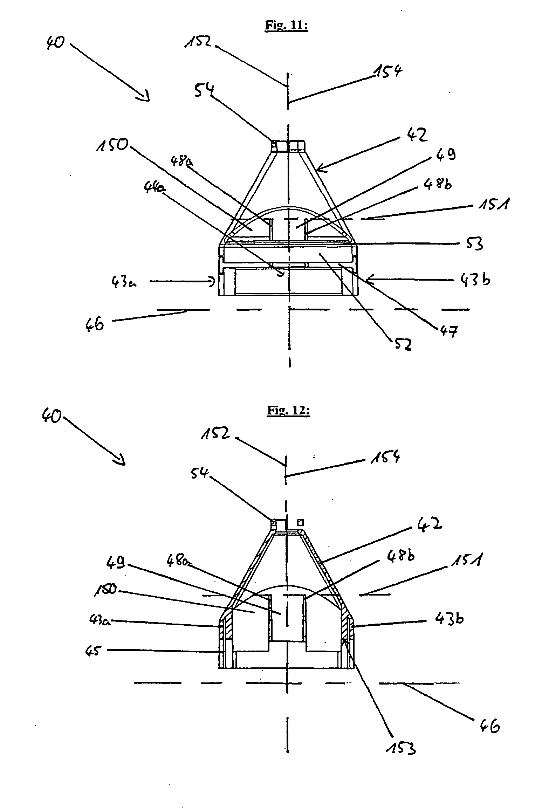

Der Aufnahmeeinrichtungsdeckel 40 besteht im Wesentlichen aus einem, auf eine vertikale Deckelmittelachse 152, die im zusammengebauten Zustand der Futtertrogmittelachse 11 entspricht, zulaufenden, Deckeldach 42 und aus vier sich jeweils paarweise gegenüberliegenden und im Wesentlichen vertikal erstreckenden Deckelwänden 43a,43b,44a,44b. Dabei sind die sich gegenüberliegenden Deckelwände 43a und 43b ebenflächig und vorzugsweise geschlitzt ausgebildet, so dass sie doppelwandig gestaltet sind (Fig. 12).

Zudem weist der Aufnahmeeinrichtungsdeckel 40 eine zylinderrohrsegmentförmige Deckelaussparung 45 mit einer Deckelaussparungsachse 46 auf, die sich durchgehend durch die ebenflächigen Deckelwände 43a und 43b erstreckt und infolgedessen zylindrische Deckellaufflächen 153 in den Deckelwänden 43a,43b bildet. Die Erstreckung in Umfangsrichtung der Deckelaussparung 45 in den Deckelwänden 43a,43b ist zudem zweckmäßigerweise kleiner als 180 °, vorzugsweise 100 bis 160 °, bevorzugt 120 bis 140 °.

Die beiden anderen Deckelwände 44a,44b sind derart gestaltet, dass sie jeweils eine durchgängige, T-förmige Deckelführungsnut 47 bilden, die parallel zur Deckelaussparungsachse 46 verläuft. Zudem sind in einem ebenflächig verlaufenden rückwärtigen Bereich 150 der Deckelwände 44a,44b jeweils zwei vertikale und voneinander beabstandete Schlitze 48a,48b vorgesehen, so dass jeweils eine Lasche 49 in den Deckelwänden 44a,44b gebildet wird, die um eine Laschenbiegeachse 151 begrenzt elastisch verschwenkbar ist. Die Laschen 49 erstrecken sich vom oberen Ende der Deckelwände 44a,44b in etwa bis auf die Höhe der Mitte der T-förmigen Deckelführungsnut 47 und weisen endseitig jeweils von einer vertikalen Deckelmittenlängsebene 50 weggerichtete Laschenverriegelungsnasen 51 auf. Zudem sind die Laschen 49 vorzugsweise symmetrisch zu einer vertikalen Deckelmittenquerebene 154 angeordnet.

Außerdem ist beidseitig an die Deckelwände 44a,44b oberhalb der Deckelführungsnuten 47 jeweils ein Zylinderrohrabschnitt 52 mit seiner horizontalen Zylinderdeckenwandung 53 angeformt. Im Bereich der Lasche 49 ist die Zylinderdeckenwandung 53 ausgespart.

Am oberen Ende des Deckeldaches 42 sind zudem Befestigungselemente 54 vorgesehen, in die ein Draht oder dergleichen (nicht dargestellt) eingespannt werden kann, der sich zweckmäßigerweise über die volle Länge des Förderrohres 5 und in einem bestimmten Abstand darüber erstreckt und der verhindert, dass sich das Geflügel auf das Förderrohr 5 setzt.

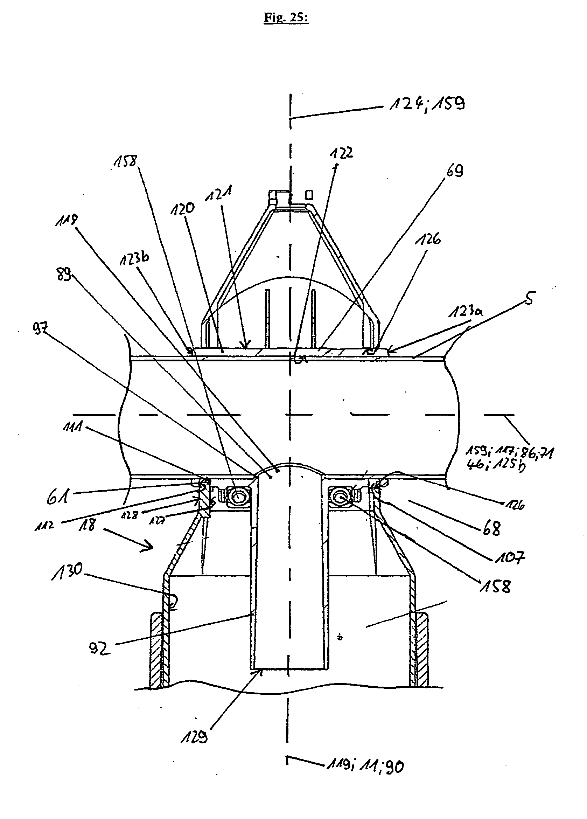

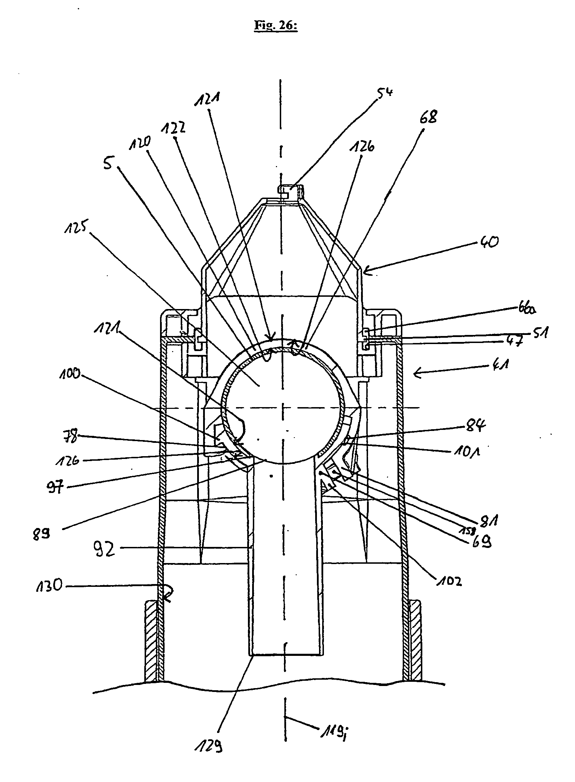

Der Fallrohraufnahmebereich 41 (Fig.1-6,23-26) weist ebenfalls vier sich jeweils paarweise gegenüberliegende und im Wesentlichen vertikal erstreckende Aufnahmebereichwände 55a,55b,56a,56b auf, von denen die beiden sich gegenüberliegenden Aufnahmebereichwände 55a und 55b ebenflächig und die beiden anderen Aufnahmebereichwände 56a und 56b zylinderrohrsegmentförmig ausgebildet sind. In den beiden ebenflächigen Aufnahmebereichwänden 55a,55b ist zudem eine durchgehende, zylindrische Fallrohraufnahmeöffnung 57 mit einer horizontalen Fallrohröffnungsmittelachse 58 vorgesehen. Dabei ist die Fallrohraufnahmeöffnung 57 nach oben offen ausgebildet, wobei die Erstreckung in Umfangsrichtung der Fallrohraufnahmeöffnung 57 in den Aufnahmebereichwänden 55a,55b vorzugsweise 200 bis 260 °, bevorzugt 220 bis 240 ° beträgt, da die Fallrohraufnahmeöffnung 57 im zusammengebauten Zustand des Futtertroges 1 zu der Deckelaussparung 45 gegenüberliegend angeordnet ist und eine gemeinsame Aufnahmeöffnung 125 definiert wird, worauf später näher eingegangen wird.

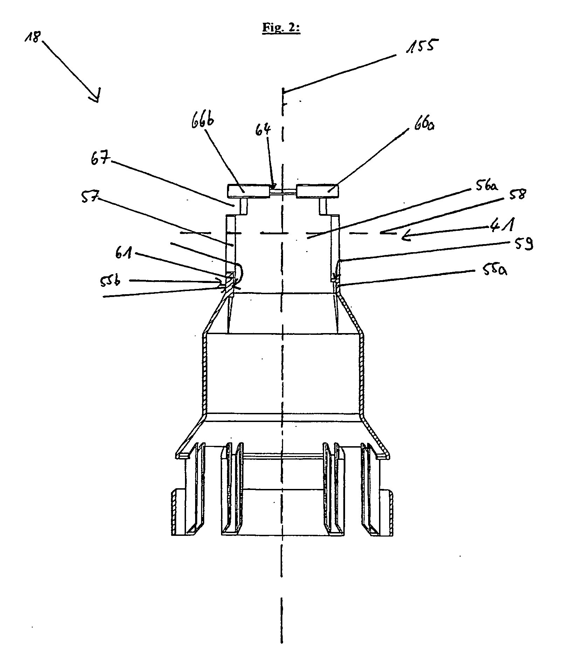

Des weiteren sind die beiden ebenflächigen Aufnahmebereichwände 55a,55b im Bereich der Fallrohraufnahmeöffnung 57 in Richtung einer vertikalen Fallrohrmittenquerebene 155 eingestülpt (Fig.2), so dass jeweils eine verbreiterte, zylindrische Fallrohrauffläche 59 gebildet wird.

In einem unteren Bereich 60 der Fallrohraufnahmeöffnung 57 ist an der Fallrohrlauffläche 59 und von dieser, im wesentlichen vertikal nach oben, weggerichtet ein Mitnehmerzapfen 61 vorgesehen. Der Mitnehmerzapfen 61 erstreckt sich somit sowohl in Umfangsrichtung der Fallrohraufnahmeöffnung 57 als auch in Richtung der Fallrohröffnungsmittelachse 58. Vorzugsweise ist der Mitnehmerzapfen 61 symmetrisch in Bezug zu einer vertikalen Fallrohrmittenlängsebene 156 angeordnet.

Des weiteren weist der Mitnehmerzapfen 61 Zapfenseitenwände 62 auf, die vorzugsweise radial nach innen auf die Fallrohröffnungsmittelachse 58 zu gerichtet ausgebildet sind und einen Abstand voneinander in Umfangsrichtung von vorzugsweise 20 bis 50 °, bevorzugt 30 bis 40 °, aufweisen. Nach einer weiteren Ausführungsform sind die Zapfenseitenwände 62 zueinander parallel (nicht dargestellt).

Des weiteren erstrecken sich die beiden zylinderrohrsegmentförmigen Aufnahmebereichwände 56a,56b in vertikaler Richtung etwas über die ebenflächigen Aufnahmebereichwände 55a,55b hinaus und weisen obenendseitig angeformte, horizontale, ebene und kreissegmentförmige Aufnahmedeckenwandungen 64 mit jeweils einer geraden Kreissegmentkante 65 auf, die parallel zur Aufnahmeöffnungsmittelachse 57 verläuft. An die Kreissegmentkanten 65 schließen sich jeweils zwei paarweise und voneinander beabstandet angeordnete, vertikal nach unten und entlang der Kreissegmentkanten 65 ausgerichtete, Verriegelungs- bzw. Befestigungsschienen 66a,66b an. Der Abstand der paarweisen Befestigungsschienen 66a,66b entspricht dabei vorzugsweise der Breite der Laschen 49 des Aufnahmeeinrichtungsdeckels 40.

Zudem sind in den Aufnahmebereichwänden 56a,56b jeweils auf beiden Seiten Aussparungen 67 vorgesehen.

Die Kupplungsschelle 4 des erfindungsgemäßen Futtertroges 1 dient zum einen zur Lagerung des Förderrohres 5 in der Aufnahmeöffnung 125 der Förderrohraufnahmeeinrichtung 26 und zum anderen zur direkten bzw. versetzten/nachgeordneten Übertragung der Drehbewegung des Förderrohres 5 auf den Futtertrog 1.

Dazu ist die Kupplungsschelle 4 zweiteilig aufgebaut und weist ein Schellenunterteil bzw. eine untere Schellenverdrehsicherung 68 und ein oberes Schellenverschlussteil 69 auf.

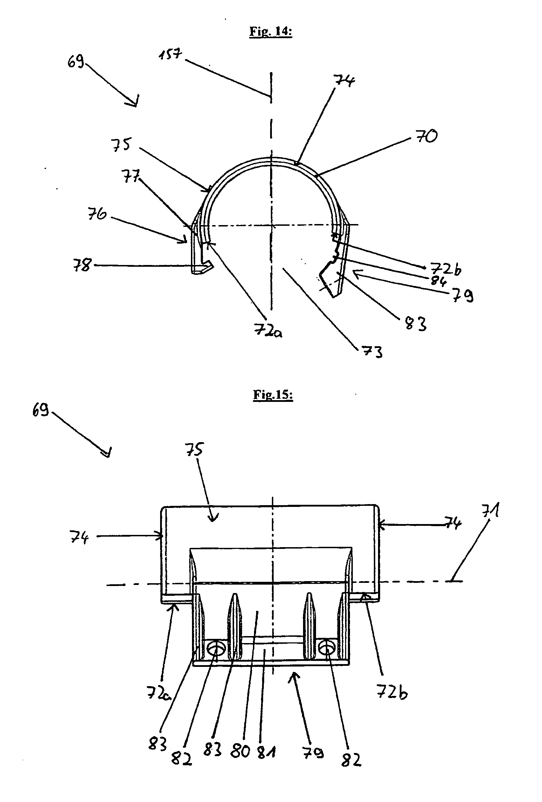

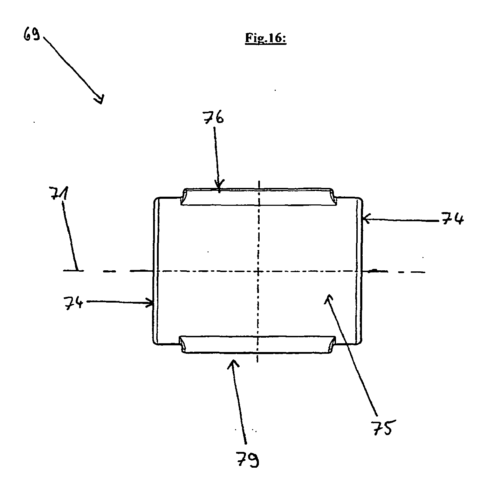

Das Schellenverschlussteil 69 (Fig.1,14-16,23 und 24) besteht im wesentlichen aus einer zylinderrohrförmigen Verschlussteilwandung 70 mit einer Verschlussteilzylinderachse 71, wobei die Verschlussteilwandung 70 in axialer Richtung durchgehend geschlitzt ausgebildet ist, so dass sie nach unten offen ist und zwei sich radial auf die Verschlussteilmittelachse 71 zu, und parallel zu dieser erstreckende Verschlussteilkanten 72a,72b aufweist. Die Erstreckung in Umfangsrichtung des resultierenden Verschlussteilschlitzes 73 beträgt dabei vorzugsweise 130 bis 175 °, bevorzugt 150 bis 165 °. Zudem ist die Verschlussteilwandung 70 zweckmäßigerweise nicht symmetrisch zu einer Verschlussteilmittenlängsebene 157, was an der unsymmetrischen Anordnung der Verschlussteilkanten 72a,72b zu erkennen ist (Fig.14). Die Verschlussteilkante 72b ist im Vergleich zur Verschlussteilkante 72a etwas "zurück gesetzt" ausgebildet.

Zudem weist das Schellenverschlussteil 69 ebene, sich in Umfangsrichtung erstreckende Verschlussteilstirnkanten 74 auf.

Des weiteren entspricht der Außenradius der Verschlussteilwandung 70 in etwa dem Radius der Aufnahmeöffnung 125 der Förderrohraufnahmeeinrichtung 26 und der Innenradius dem Außenradius des Förderrohres 5, worauf später näher eingegangen wird.

An einer Verschlussteilaußenwandung 75 im Bereich der Verschlussteilkante 72a ist zudem ein sich parallel zur Verschlussteilmittelachse 71 erstreckendes Verschlussteilrastelement 76 vorgesehen. Das Verschlussteilrastelement 76 weist einen Verschlussteilrastarm 77 und einen sich an den Verschlussteilrastarm 77 anschließenden Verschlussteilrasthaken 78 auf und erstreckt sich vorzugsweise nicht ganz über die gesamte axiale Länge des Schellenverschlussteils 69.

Auf der Seite der zweiten Verschlussteilkante 72b ist ebenfalls an der Verschlussteilaußenwandung 75 ein Verschraubungselement 79, bestehend aus einer zylinderrohrsegmentförmigen Verschlussteilverschraubungselementwandung 80 und einem sich daran in radialer Richtung anschließenden, plattenförmigem Verschlussteilverschraubungsflansch 81 mit zwei Verschlussteilschraubendurchgangsbohrungen 82. Zweckmäßigerweise sind Verschlussteilverschraubungselementwandung 80 und Verschlussteilverschraubungsflansch 81 zusätzlich durch Versteifungsrippen 83 miteinander verbunden. Auch das Verschraubungselement 79 erstreckt sich parallel zur Verschlussteilzylinderachse 71 und vorzugsweise nicht ganz über die gesamte axiale Länge des Schellenverschlussteils 69.

In das Verschraubungselement 79 ist außerdem eine sich ebenfalls parallel zur Verschlussteilzylinderachse 71 erstreckende Verschlussteilrastnut 84 eingebracht.

Des weiteren besteht das Schellenverschlussteil 69 vorzugsweise aus einem Kunststoff, bevorzugt einem Hartkunststoff, wie zum Beispiel Polyoxymethylen (POM), und wird vorzugsweise durch Gießen, bevorzugt Spritzgießen oder Druckgießen hergestellt.

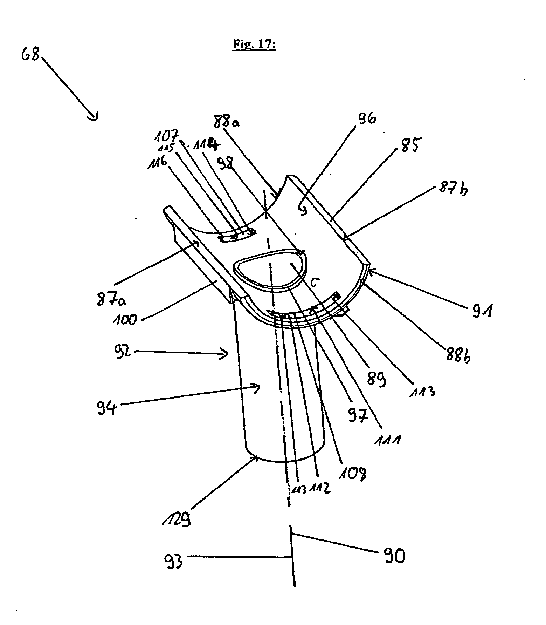

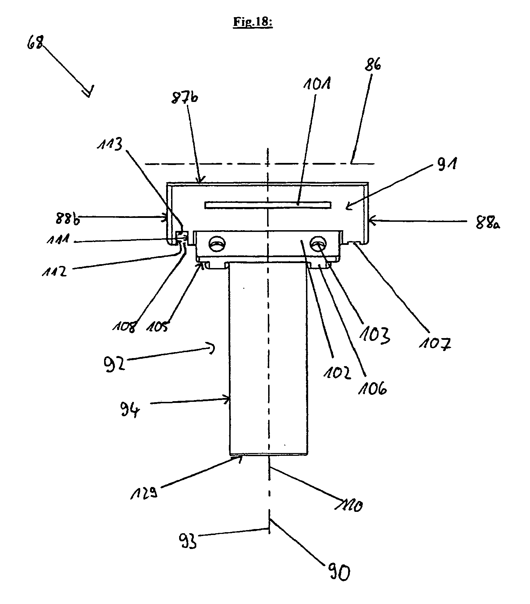

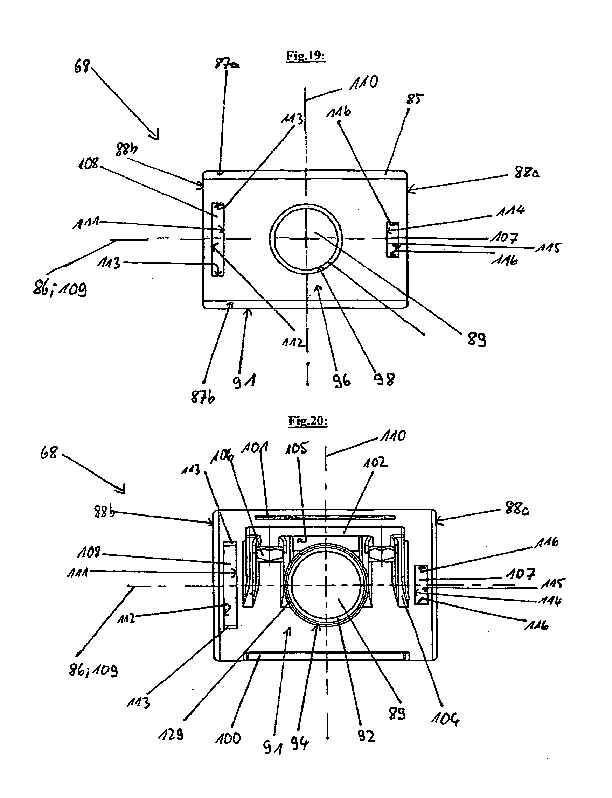

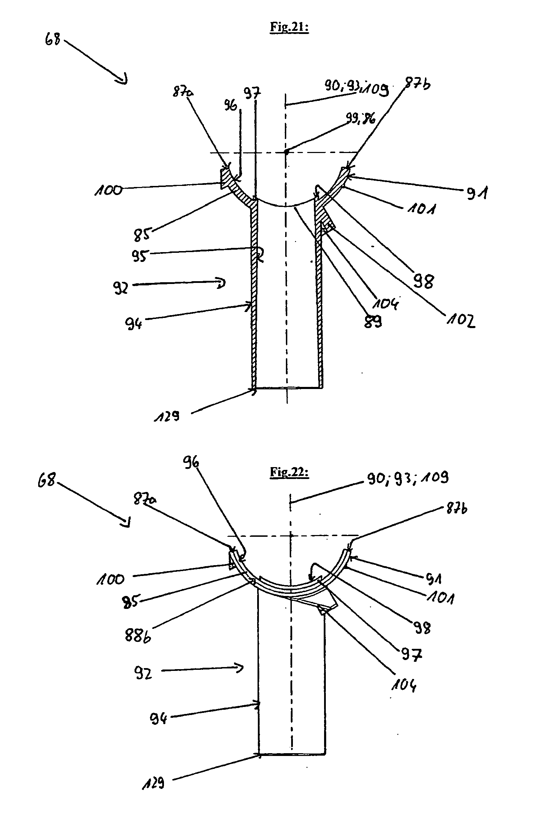

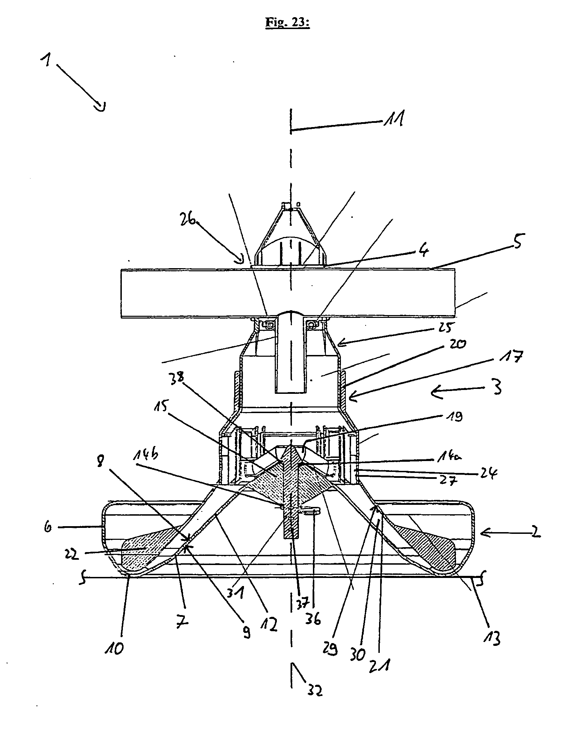

Im Folgenden wird als nächstes der Aufbau des Schellenunterteils 68 des erfindungsgemäßen Futtertroges 1 anhand der Fig. 17 bis 24 näher erläutert.

Das Schellenunterteil 68 (Fig.1,17-24) weist ebenfalls eine zylinderrohrförmige Unterteilwandung 85 auf, die in Richtung einer Unterteilzylinderachse 86 geschlitzt ist. Dabei entspricht der Außenradius der Unterteilwandung 85 wiederum dem Innenradius der Aufnahmeöffnung 125 und der Innenradius der Unterteilwandung 85 dem Außenradius des Förderrohres 5, so dass die Radien der Unterteilwandung 85 und der Verschlussteilwandung 70 gleich sind. Die Erstreckung in Umfangsrichtung der Unterteilwandung 85 ist zudem gleich oder vorzugsweise etwas geringer als die Erstreckung in Umfangsrichtung des Verschlussteilschlitzes 73. Außerdem weist das Schellenunterteil 68 ebenfalls sich radial und parallel zur Unterteilzylinderachse 86 erstreckende Unterteilkanten 87a,87b und sich in Umfangsrichtung und senkrecht zur Unterteilzylinderachse 86 erstreckende Unterteilstirnkanten 88a,88b auf.

Vorzugsweise mittig sowohl in Bezug zu den beiden Unterteilstirnkanten 88a,88b als auch zu den Unterteilkanten 87a,87b ist in der Unterteilwandung 85 eine zylindrische Futterdurchgangsöffnung 89 mit einer Futterdurchgangsmittelachse 90 vorgesehen. In Richtung der Futterdurchgangsmittelachse 90 und von der Unterteilwandung 85 nach außen weg gerichtet ist koaxial zur Futterdurchgangsöffnung 89 an einer Unterteilaußenwandung 91 ein Wasserableitstutzen bzw. Volumenreduzierschacht bzw. Antriebsstutzen 92 mit einer Stutzenmittelachse 93 angeformt, dessen Stutzenaußenwandung 94 zylindrisch ist und dessen Stutzeninnenwandung 95 einen konischen Verlauf hat, wobei der Innenradius der Stutzeninnenwandung 95 im Bereich der Futterdurchgangsöffnung 89 dem Radius der Futterdurchgangsöffnung 89 entspricht und mit wachsendem Abstand zur Unterteilaußenwandung 91 geringfügig zunimmt.

Die Länge des Wasserableitstutzens 92 beträgt vorzugsweise 50 bis 90 mm, bevorzugt 65 bis 75 mm.

Erfindungsgemäß ist zudem an einer Unterteilinnenwandung 96 ein koaxial zur Futterdurchgangsmittelachse 90 angeordneter, zylindrischer Verdrehsicherungsbund 97 mit einer Verdrehsicherungsstirnfläche 98 angeformt. Der Außenradius des Verdrehsicherungsbundes 97 entspricht dabei dem Radius der Futterdurchgangsöffnung 89. Die Verdrehsicherungsstirnfläche 98 ist derart zylinderwandungsförmig ausgebildet, dass die zugehörige Verdrehsicherungsstirnflächenzylinderachse 99 der Unterteilzylinderachse 86 entspricht, wobei der Radius der Verdrehsicherungsstirnfläche 98 zweckmäßigerweise dem Innenradius des Förderrohres 5 entspricht.

Des weiteren ist an der Unterteilaußenwandung 91 in der Nähe der Unterteilkante 87a eine zum Verschlussteilrastelement 76 korrespondierende Unterteilrastnase 100 angeformt, die sich ebenfalls parallel zur Unterteilzylinderachse 86 nicht ganz über die gesamte axiale Länge des Schellenunterteils 68 erstreckt.

Gegenüberliegend zur Unterteilrastnase 100 ist in der Nähe der Unterteilkante 87b ein im Vergleich zur Unterteilrastnase 100 kleinerer Unterteilrastvorsprung 101 an der Unterteilaußenwandung 91 angeformt. Auch der Unterteilrastvorsprung 101 erstreckt sich parallel zur Unterteilzylinderachse 86 und korrespondiert im zusammengebauten Zustand des Futtertroges 1 mit der Verschlussteilrastnut 84, worauf später näher eingegangen wird.

Außerdem weist das Schellenunterteil 68 einen an der Unterteilaußenwandung 91 angeformten, plattenförmigen Unterteilverschraubungsflansch 102 mit zwei zu den Verschlussteilschraubendurchgangsbohrungen 82 korrespondierenden Unterteilschraubendurchgängen 103 auf. Der Unterteilverschraubungsflansch 102 erstreckt sich parallel zur Unterteilzylinderachse 86 und radial in Bezug zu dieser und ist neben dem Wasserableitstutzen 92 auf der Seite des Unterteilrastvorsprungs 101 angeordnet. Zur besseren Verbindung von Unterteilaußenwandung 91 und Unterteilverschraubungsflansch 102 sind zudem Versteifungsrippen 104 vorgesehen. Zudem ist auf einer dem Wasserableitstutzen 92 zugewandten Fläche 105 des Unterteilverschraubungsflansches 102 jeweils ein sechseckig ausgebildeter Mutteraufnahmebund 106 angeformt.

Das Schellenunterteil 68 weist zudem einen sich in Umfangsrichtung erstreckenden Kopplungsschlitz 107 und einen sich ebenfalls in Umfangsrichtung erstreckenden Axialsicherungsschlitz 108 in der Unterteilwandung 85 auf.

Der Kopplungsschlitz 107 ist in Bezug zum Wasserableitstutzen 92 auf der Seite der Unterteilstirnkante 88a und der Axialsicherungsschlitz 108 auf der Seite der zweiten Unterteilstirnkante 88b angeordnet. Zudem sind beide Schlitze 107,108 symmetrisch in Bezug zu einer Unterteilmittenlängsebene 109, die von der Unterteilzylinderachse 86 und der Stutzenmittelachse 93 aufgespannt wird, und in Bezug zu einer Unterteilmittenquerebene 110, die senkrecht zur Unterteilmittenlängsebene 109 ist und ebenfalls die Stutzenmittelachse 93 enthält, sich gegenüberliegend bzw. symmetrisch angeordnet.

Des weiteren weist der Axialsicherungsschlitz 108 eine ebene, zur Unterteilmittenquerebene 110 parallele Sicherungsschlitzbodenwandung 111 und eine dieser gegenüberliegende und zu dieser parallele Sicherungsschlitzdeckenwandung 112, sowie zwei sich radial erstreckende, ebene Sicherungsschlitzseitenwandungen 113 auf.

Dabei ist der Abstand der beiden Sicherungsschlitzseitenwandungen 113 in Umfangsrichtung und somit die Erstreckung des Axialsicherungsschlitzes 108 in Umfangsrichtung deutlich größer als die Erstreckung des Mitnehmerzapfens 61 in Umfangsrichtung. Zudem entspricht der Abstand der Sicherungsschlitzbodenwandung 111 von der Sicherungsschlitzdeckenwandung 112 der Dicke des Mitnehmerzapfens, also dem Abstand einer Zapfenrückwand 127 von einer Zapfenvorderwand 128.

Analog zum Axialsicherungsschlitz 108 weist auch der Kopplungsschlitz 107 eine ebene, zur Unterteilmittenquerebene 110 parallele Kopplungschlitzbodenwandung 114 und eine dieser gegenüberliegende und zu dieser parallele Kopplungschlitzdeckenwandung 115, sowie zwei sich radial erstreckende, ebene Kopplungschlitzseitenwandungen 116 auf.

Dabei ist der Abstand der beiden Kopplungsschlitzseitenwandungen 116 in Umfangsrichtung und somit die Erstreckung des Kopplungsschlitzes 107 in Umfangsrichtung gleich der Erstreckung des Mitnehmerzapfens 61 in Umfangsrichtung.

Zudem entspricht der Abstand der Kopplungschlitzbodenwandung 114 bzw. der Sicherungsschlitzbodenwandung 111 von der Kopplungschlitzdeckenwandung 115 bzw. der Sicherungsschlitzdeckenwandung 112 ebenfalls der Dicke des Mitnehmerzapfens 61.

Des weiteren besteht das Schellenunterteil 68 vorzugsweise aus einem Kunststoff, bevorzugt einem Hartkunststoff, wie zum Beispiel Polyoxymethylen (POM), und wird vorzugsweise durch Gießen, bevorzugt Spritzgießen oder Druckgießen hergestellt.

Das zylindrische Förderrohr 5 (Fig. 1,23 bis 27) mit seiner Förderrohrachse 117 des nicht dargestellten Röhrenfütterungssystems weist eine ebenfalls zylindrische Futterdurchlassöffnung 118 mit einer Futterdurchlasszylinderachse 119 auf, deren Radius dem Außenradius des Verdrehsicherungsbundes 97 entspricht.

Im folgenden wird anhand der Fig. 23-26 der zusammengebaute Zustand des erfindungsgemäßen Futtertroges 1 bezüglich der Aufnahme des Förderohres 5 und der Übertragung der Drehbewegung näher erläutert.

Im zusammengebauten Zustand ist das Förderrohr 5 derart auf dem Schellenunterteil 68 angeordnet, dass die Unterteilzylinderachse 86 und die Förderrohrachse 117 zusammenfallen und die Futterdurchlassöffnung 118 koaxial bzw. fluchtend zur Futterdurchgangsöffnung 89 des Schellenunterteils 68 angeordnet ist, so dass der Verdrehsicherungsbund 97 des Schellenunterteils 68 formschlüssig in die Futterdurchlassöffnung 118 des Förderrohres 5 eingreift.

Zudem umgreift das Schellenverschlussteil 69 das Förderrohr 5 oberhalb des Schellenunterteils 68. Dabei ist das Schellenverschlussteil 69 mit seinem Verschlussteilrasthaken 78 mit der Unterteilrastnase 100 formschlüssig verrastet und der Unterteilrastvorsprung 101 ist in der Verschlussteilrastnut 84 angeordnet. Dabei sind der Unterteilverschraubungsflansch 102 und der Verschlussteilverschraubungsflansch 81 parallel und sich gegenüberliegend angeordnet, so dass die Verschlussteilschraubendurchgangsbohrungen 82 und die Unterteilschraubendurchgangsbohrungen 103 fluchtend zueinander angeordnet sind und Schellenunterteil 69 und Schellenverschlussteil 68 mit zwei Schrauben, vorzugsweise mit zwei Zylinderkopfschrauben 158, und zwei Muttern (nicht dargestellt), die in jeweils einem Mutteraufnahmebund 106 angeordnet sind, verspannt sind.

Der Unterteilrastvorsprung 101 ist dabei so bemessen, dass er begrenzt verschieblich in der Verschlussteilrastnut 84 ist und somit Schellenunterteil 68 und Schellenverschlussteil 69 mit den Schrauben 158 verspannt werden können. Insofern dienen der Unterteilrastvorsprung 101 und die Verschlussteilrastnut 84 lediglich als Montagehilfe, damit vor dem Verspannen das Schellenunterteil 68 mit dem Schellenverschlussteil 69 vorläufig verrastet ist, und können auch wegfallen.

Infolgedessen sind Schellenunterteil 68 und Schellenverschlussteil 69 fest miteinander verbunden und bilden die Kupplungsschelle 4, wobei Unterteilzylinderachse 86 und Verschlussteilzylinderachse 71 zusammen fallen und eine Schellenmittelachse 159 definieren, so dass jeweils eine einheitliche Schellenwandung 120, Schellenaußenwandung 121 und Schelleninnenwandung 122 gebildet wird. Zudem schließen auch die jeweiligen Stirnkanten 74 bzw. 88a,88b von Schellenunterteil 68 und Schellenverschlusssteil 69 bündig miteinander ab und bilden einheitliche Schellenstirnkanten 123a,123b. Die Unterteilquermittenebene 110 bildet eine Schellenmittenquerebene 124.

Die Länge der Kupplungsschelle 4 in Richtung der Schellenmittelachse 159 beträgt vorzugsweise 50 bis 90 mm, bevorzugt 60 bis 80 mm.

Infolgedessen ist das Förderrohr 5 somit mittels des Verdrehsicherungsbundes 97 fest, also unverschieblich und unverdrehbar in der Kupplungsschelle 4 gelagert und mit dieser verbunden.

Des weiteren ist im zusammengebauten Zustand des Futtertroges 1 der Aufnahmeeinrichtungsdeckel 40 mit dem Fallrohraufnahmebereich 41 fest verbunden, indem die Befestigungsschienen 66a,66b des Fallrohraufnahmebereichs 41 derart in den T-förmigen Deckelführungsnuten 47 angeordnet sind, dass die Laschenverriegelungsnasen 51, die bei der Montage zurückgebogen werden, in den Zwischenraum zwischen den paarweisen Befestigungsschienen 66a,66b eingreifen und diese fixieren. Dabei fallen Deckelaussparungsachse 46 und Fallrohröffnungsmittelachse 58 als Aufnahmeöffnungsmittelachse 125b zusammen und die Deckelaussparung 45 und die Fallrohraufnahmeöffnung 57 bilden die einheitliche, geschlossene Schellenaufnahmeöffnung 125 mit zwei, zweckmäßigerweise geschlossenen, Schellenlagerflächen bzw. Schellenführungsflächen bzw. Schellenlaufflächen 126 auf denen die Kupplungsschelle 4 mit ihrer Schellenaußenwandung 121 gelagert ist. Zweckmäßigerweise ist die Kupplungsschelle 4 jeweils im Bereich des Axialsicherungsschlitzes 108 und des Kopplunsschlitzes 107 auf den Laufflächen 126 geführt.

Dabei ist die Kupplungsschelle 4 zunächst zur Fütterung derart angeordnet, dass die Futterdurchgangsmittelachse 119 vertikal nach unten gerichtet ist und vorzugsweise mit der Futtertrogmittelachse 11 zusammenfällt, damit vom Förderrohr 5 angefördertes Futter durch die Futterdurchlassöffnung 118 und die Futterdurchgangsöffnung 89 über die von Trogtrichter 17, Fallrohr 18 und Raumstabwerk 19 gebildete Futterleiteinrichtung 3 in die Bodenschale 2 fällt.

Ist eine direkte Übertragung der Drehbewegung des Förderrohres 5 um die Förderrohrachse 117 auf den Futtertrog 1 erforderlich, ist die Kupplungsschelle 4 derart in der Schellenaufnahmeöffnung 125 angeordnet, dass der Kopplungsschlitz 107 den Mitnehmerzapfen 61 formschlüssig umgreift.

Dabei liegen die Kopplungsschlitzseitenwandungen 116 an den Zapfenseitenwänden 62, die Kopplungsschlitzbodenwandung 114 an der Zapfenrückwand 127 und die Kopplungsschlitzdeckenwandung 115 an der Zapfenvorderwand 128 an. Dadurch ist die Kupplungsschelle 4 fest mit dem Fallrohr 18 verbunden. Der Futtertrog 1 hängt somit nicht pendelnd, sondern starr über dem Hallenboden 13.

Die zentrale Drehbewegung des Förderrohres 5 wird ohne Verzögerung über die Kupplungsschelle 4 auf das Fallrohr 18 und somit auf den Futtertrog 1 übertragen.

Ist eine verzögerte Übertragung der Drehbewegung erforderlich, ist die Kupplungsschelle 4 im Vergleich zur vorher beschriebenen Einbauweise um 180° um die Futterdurchgangsmittelachse 119 bzw. die Futtertrogmittelachse 11 gedreht bzw. spiegelverkehrt in Bezug zu der Schellenmittenquerebene 124 bzw. einer mit der Schellenmittenquerebene 124 zusammenfallenden Futtertrogmittenquerebene 159 eingebaut, so dass der Axialsicherungsschlitz 108 den Mitnehmerzapfen 61 umgreift. Dabei liegt analog zum Kopplungsschlitz 107 die Sicherungsschlitzbodenwandung 111 an der Zapfenrückwand 127 und die Sicherungsschlitzdeckenwandung 112 an der Zapfenvorderwand 128 an. Die Sicherungsschlitzseitenwandungen 113 sind allerdings in der Ausgangsstellung bzw. der Fütterungsstellung des Futtertroges 1 in Umfangsrichtung beabstandet von den Zapfenseitenflächen 62 angeordnet. Infolgedessen ist das Förderrohr 5 über die Kupplungsschelle 4 mit dem Fallrohr 18 unverschieblich, aber um einen begrenzten Betrag um die Förderrohrmittelachse 117 gegenüber dem Fallrohr 18 und somit dem Futtertrog 1 verdrehbar, wenn der Axialsicherungsschlitz 108 den Mitnehmerzapfen 61 umgreift. Der Futtertrog 1 hängt somit frei pendelnd über dem Hallenboden 13.

Wird das Förderrohr 5 jetzt aus der Fütterungsposition um die Förderrohrachse 119 gedreht, wird zunächst nur die auf dem Förderrohr 5 befestigte Kupplungsschelle 4 samt Futterdurchgangsöffnung 89 und Wasserableitstutzen 92 mitgenommen und somit gegenüber dem restlichen Futtertrog 1, insbesondere gegenüber der Futtertrogmittelachse 11, verschwenkt.

Der Futtertrog 1 bleibt so lange in seiner Position unverändert, bis der Wasserableitstutzen 92 mit einer ringförmigen Stutzenaußenendkante 129 an einer Fallrohrinnenwandung 130 anstößt. Ab diesem Zeitpunkt wird die Drehbewegung des Förderrohres 5 auch über die Stutzenaußenendkante 129 auf das Fallrohr 18 und somit auf den gesamten Futtertrog 1 übertragen, so dass die Kupplungsschelle 4 und der restliche Futtertrog 1 gleichzeitig bzw. zusammen mitgenommen werden, wobei die Futterdurchgangsmittelachse 90 bzw. die Stutzenmittelachse 93 der Futtertrogmittelachse 11 voraus eilt.

Hat der Futtertrog 1 seine Waschstellung erreicht, in der er vorzugsweise um 45° in Bezug zur Horizontalen nach oben gerichtet ist, ist die Futterdurchgangsmittelachse 90 um mehr als 45° in Bezug zur Horizontalen nach oben gerichtet angeordnet. Insbesondere ist sie um den Winkelbetrag mehr nach oben gerichtet angeordnet, um den das Förderrohr 5 gedreht wurde, bis die Stutzenendkante 129 an der Fallrohrinnenwandung 130 angestoßen ist. Dieser Winkelbetrag beträgt vorzugsweise 5 bis 35 °, bevorzugt 10 bis 25 °.

Selbstverständlich ist es aber auch möglich, die Drehbewegung teilweise unterstützend oder ausschließlich über den Axialsicherungsschlitz zu übertragen, wenn dieser dementsprechend in seiner Erstreckung in Unfangsrichtung bemessen ist.

Zudem muss der Mitnehmerzapfen nicht an dem unteren Bereich der Lauffläche und symmetrisch zur Fallrohrquermittenebene angeordnet sein, sondern kann auch an einer anderen Stelle der Lauffläche vorgesehen sein.

Dadurch, dass die Futterdurchgangsöffnung also beim Waschen, wobei das Wasser üblicherweise schräg von unten oder von der Seite in den Futtertrog eingespritzt wird, im Wesentlich nach oben geöffnet angeordnet ist, dringt kein Waschwasser durch die Futterdurchgangsöffnung in das Förderrohr und an das sich im Förderrohr befindliche Futter vor.

Dies wird zudem noch durch den Wasserableitstutzen begünstigt, an dem auftreffendes Waschwasser seitlich abgeleitet wird, weshalb auch bei direkter Kopplung von Förderrohr und Futtertrog so gut wie kein Waschwasser in das Förderrohr eindringt.

Von Vorteil ist außerdem die Übertragung der Drehbewegung über den Wasserableitstutzen bzw. Antriebsstutzen, da die Kraft relativ weit entfernt von der Drehachse eingeleitet wird und somit aufgrund der Hebelwirkung gering ist.

Des weiteren trägt der Wasserableitstutzen zur Reduzierung des Futtervolumens bei, was sich in dem Futtertrog befindet, so dass dem Geflügel immer frisches Futter angeboten wird.

Der erfindungsgemäße Futtertrog ist somit einfach aufgebaut und zu montieren und derart über die Kupplungsschelle mit dem Förderrohr gekoppelt, dass die Drehbewegung des Förderrohres in einfacher Weise auf den gesamten Futtertrog übertragen wird und dieser so in eine Waschstellung gedreht wird, in der kein Waschwasser an das sich im Förderrohr befindliche Futter vordringt. Außerdem ist es mit dem erfindungsgemäßen Futtertrog besonders einfach möglich, nämlich lediglich durch spiegelverkehrten Einbau der Kupplungsschelle, je nach Wunsch zwischen einer direkten Kopplung, in der der Futtertrog in der Fütterungsstellung starr nach unten hängt und einer verzögerten bzw. indirekten Kopplung, in der der Futtertrog in der Fütterungsstellung pendelnd aufgehängt ist, zu wechseln.

## Patentansprüche

1. Futtertrog für Geflügel zur Verwendung in Verbindung mit einem Röhrenfütterungssystem, das ein Förderrohr (5) mit einer Futterdurchlassöffnung (118) aufweist, wobei der Futtertrog
a) eine tellerförmige Bodenschale (2),
b) eine in Bezug zu einer vertikalen Futtertrogmittelachse (11) mittig zentral über der Bodenschale (2) angeordnete im wesentlichen rohrförmigen Futterleiteinrichtung (3),
c) eine sich in vertikaler Richtung nach oben an die Futterleiteinrichtung (3) anschließenden Förderrohraufnahmeeinrichtung (26), die eine Aufnahmeöffnung (125) und mindestens ein Mitnahmemittel (61) zur Übertragung der Drehbewegung des Förderrohres (5) auf den Futtertrog (1) aufweist und
d) eine innerhalb der Aufnahmeöffnung (125) angeordneten Kupplungsschelle (4), die mindestens ein zum Mitnahmemittel (61) korrespondierendes Antriebsmittel (107,108) aufweist und in der das Förderrohr (5) derart unverschieblich und unverdrehbar gelagert ist, dass die Futterdurchlassöffnung (118) im Bereich einer Futterdurchgangsöffnung (89) der Kupplungsschelle (4) angeordnet ist,
aufweist.

2. Futtertrog nach Anspruch 1,
**dadurch gekennzeichnet, dass**
die Kupplungsschelle (4) ein Antriebsmittel (107) aufweist, mit dem die Drehbewegung des Förderrohres (5) direkt bzw. ohne Verzögerung auf den Futtertrog (1) übertragbar ist.

3. Futtertrog nach Anspruch 2,
**dadurch gekennzeichnet, dass**
das direkt übertragende Antriebsmittel ein sich in einer Schellenwandung (120) in Umfangsrichtung der Kupplungsschelle (4) erstreckender Kopplungsschlitz (107) ist.

4. Futtertrog nach einem oder mehreren der Ansprüche 1 bis 3,
**dadurch gekennzeichnet, dass**
die Kupplungsschelle (4) ein Antriebsmittel (108) aufweist, mit dem die Drehbewegung des Förderrohres (5) mit Verzögerung auf den Futtertrog (1) übertragbar ist.

5. Futtertrog nach Anspruch 4,
**dadurch gekennzeichnet, dass**
das verzögernd übertragende Antriebsmittel ein sich von der Schellenwandung (120) weg erstreckender Antriebsstutzen (92) ist.

6. Futtertrog nach einem oder mehreren der vorhergehenden Ansprüche,
**dadurch gekennzeichnet, dass**
die Kupplungsschelle (4) zweiteilig ausgeführt ist und ein Schellenunterteil (68) und ein Schellenverschlussteil (69) aufweist.

7. Futtertrog nach einem oder mehreren der Ansprüche 4 bis 6,
**dadurch gekennzeichnet, dass**
der Antriebsstutzen (92) mit seiner Stutzenmittelachse (93) koaxial zu einer Futterdurchgangmittelachse (90) der Futterdurchgangsöffnung (89) angeordnet ist.

8. Futtertrog nach einem oder mehreren der Ansprüche 4 bis 6,
**dadurch gekennzeichnet, dass**
eine Stutzenaußenwandung (94) zylindrisch ist und vorzugsweise eine Stutzeninnenwandung (95) einen konischen Verlauf hat.

9. Futtertrog nach einem oder mehreren der vorhergehenden Ansprüche,
**dadurch gekennzeichnet, dass**
das Mitnahmemittel ein sich in Umfangsrichtung der Aufnahmeöffnung (125) und in Richtung einer Aufnahmeöffnungsmittelachse (125b) erstreckender Mitnehmerzapfen (61) ist.

10. Futtertrog nach Anspruch 9,
**dadurch gekennzeichnet, dass**
die Erstreckung des Koppelschlitzes (107) in Umfangsrichtung der Erstreckung des Mitnehmerzapfens (61) in Umfangsrichtung entspricht.

11. Futtertrog nach Anspruch 9 und/oder 10,
**dadurch gekennzeichnet, dass**
der Abstand einer Kopplungsschlitzbodenwandung (114) von einer Kopplungsschlitzdeckenwandung (115) der Dicke des Mitnehmerzapfens (61) entspricht.

12. Futtertrog nach einem oder mehreren der Ansprüche 9 bis 11,
**dadurch gekennzeichnet, dass**
zur direkten Übertragung der Drehbewegung des Förderrohres (5) auf den Futtertrog (1) der Koppelschlitz (107) den Mitnehmerzapfen (61) formschlüssig umgreift.

13. Futtertrog nach einem oder mehreren der Ansprüche 3 bis 12,
**dadurch gekennzeichnet, dass**
die Kupplungsschelle (4) einen sich in der Schellenwandung (120) in Umfangsrichtung der Kupplungsschelle (4) erstreckenden Axialsicherungsschlitz (108) aufweist.

14. Futtertrog nach Anspruch 13,
**dadurch gekennzeichnet, dass**
die Erstreckung des Axialsicherungsschlitzes (108) in Umfangsrichtung größer als die Erstreckung des Mitnehmerzapfens-(61) in Umfangsrichtung ist.

15. Futtertrog nach Anspruch 13 und/oder 14,
**dadurch gekennzeichnet, dass**
der Abstand einer Sicherungsschlitzbodenwandung (111) des Axialsicherungsschlitzes (108) von einer Sicherungsschlitzdeckenwandung (112) der Dicke des Mitnehmerzapfens (61) entspricht.

16. Futtertrog nach einem oder mehreren der Ansprüche 13 bis 15,
**dadurch gekennzeichnet, dass**
das Schellenunterteil (68) den sich in Umfangsrichtung erstreckenden Kopplungsschlitz (107) und den sich in Umfangsrichtung erstreckenden Axialsicherungsschlitz (108) in einer zylinderrohrförmigen Unterteilwandung (85) aufweist.

17. Futtertrog nach Anspruch 16,
**dadurch gekennzeichnet, dass**
der Kopplungsschlitz (107) in Bezug zum Antriebsstutzen (92) auf der Seite einer Unterteilstirnkante (88a) des Schellenunterteils (68) und der Axialsicherungsschlitz (108) auf der Seite einer zweiten Unterteilstirnkante (88b) des Schellenunterteils (68) angeordnet ist.

18. Futtertrog nach Anspruch 16 und/oder 17,
**dadurch gekennzeichnet, dass**
der Kopplungsschlitz (107) und der Axialsicherungsschlitz (108) symmetrisch in Bezug zu einer Unterteilmittenlängsebene (109), die von einer Unterteilzylinderachse (86) und einer Stutzenmittelachse (93) aufgespannt wird, angeordnet sind.

19. Futtertrog nach einem oder mehreren der Ansprüche 16 bis 18,
**dadurch gekennzeichnet, dass**
der Kopplungsschlitz (107) und der Axialsicherungsschlitz (108) in Bezug zu einer Unterteilmittenquerebene (110), die senkrecht zur Unterteilmittenlängsebene (109) ist und ebenfalls die Stutzenmittelachse (93) enthält, sich gegenüberliegend bzw. symmetrisch angeordnet sind.

20. Futtertrog nach einem oder mehreren der Ansprüche 16 bis 19,
**dadurch gekennzeichnet, dass**
an einer Unterteilinnenwandung (96) der Unterteilwandung (85) ein koaxial zur Futterdurchgangsmittelachse (90) angeordneter, zylindrischer Verdrehsicherungsbund (97) mit einer Verdrehsicherungsstirnfläche (98) angeformt ist.

21. Futtertrog nach Anspruch 20,
**dadurch gekennzeichnet, dass**
der Außenradius des Verdrehsicherungsbundes (97) dem Radius der Futterdurchgangsöffnung (89) entspricht.

22. Futtertrog nach Anspruch 20 und/oder 21,
**dadurch gekennzeichnet, dass**
die Verdrehsicherungsstirnfläche (98) derart zylinderwandungsförmig ausgebildet ist, dass die zugehörige Verdrehsicherungsstirnflächenzylinderachse (99) der Unterteilzylinderachse (86) entspricht, wobei der Radius der Verdrehsicherungsstirnfläche (98) zweckmäßigerweise dem Innenradius des Förderrohres (5) entspricht.

23. Futtertrog nach einem oder mehreren der Ansprüche 20 bis 22,
**dadurch gekennzeichnet, dass**
das Förderrohr (5) derart auf dem Schellenunterteil (68) angeordnet ist, dass die Unterteilzylinderachse (86) und eine Förderrohrachse (117) zusammenfallen und die Futterdurchlassöffnung (118) koaxial bzw. fluchtend zur Futterdurchgangsöffnung (89) des Schellenunterteils (68) angeordnet ist, wobei zweckmäßigerweise der Verdrehsicherungsbund (97) des Schellenunterteils (68) formschlüssig in die Futterdurchlassöffnung (118) des Förderrohres (5) eingreift.

24. Futtertrog nach einem oder mehreren der Ansprüche 20 bis 23,
**dadurch gekennzeichnet, dass**
das Förderrohr (5) mittels des Verdrehsicherungsbundes (97) fest, also unverschieblich und unverdrehbar in der Kupplungsschelle (4) gelagert und mit dieser verbunden ist.

25. Futtertrog nach einem oder mehreren der vorhergehenden Ansprüche
**dadurch gekennzeichnet, dass**
die Förderrohraufnahmeeinrichtung (26) zweigeteilt gestaltet ist und einen oberen Aufnahmeeinrichtungsdeckel (40) und einen unteren Fallrohraufnahmebereich (41) aufweist.

26. Futtertrog nach Anspruch 25,
**dadurch gekennzeichnet, dass**
der Aufnahmeeinrichtungsdeckel (40) im Wesentlichen aus einem, auf eine vertikale, der Futtertrogmittelachse (11) entsprechenden Deckelmittelachse (152) zulaufenden Deckeldach (42) und aus vier sich jeweils paarweise gegenüberliegenden und im Wesentlichen vertikal erstreckenden Deckelwänden (43a,43b,44a,44b) besteht, wobei zweckmäßigerweise die sich gegenüberliegenden Deckelwände (43a,43b) ebenflächig und vorzugsweise geschlitzt ausgebildet sind, so dass sie doppelwandig gestaltet sind.

27. Futtertrog nach Anspruch 26,
**dadurch gekennzeichnet, dass**
der Aufnahmeeinrichtungsdeckel (40) eine zylinderrohrsegmentförmige Deckelaussparung (45) mit einer Deckelaussparungsachse (46) aufweist, die sich durchgehend durch die ebenflächigen Deckelwände (43a,43b) erstreckt, wobei zylindrische Deckellaufflächen (153) in den ebenflächigen Deckelwänden (43a,43b) gebildet werden, wobei die Erstreckung in Umfangsrichtung der Deckelaussparung (45) in den Deckelwänden (43a,43b) zweckmäßigerweise kleiner als 180 °, vorzugsweise 100 bis 160 °, bevorzugt 120 bis 140 ° ist.

28. Futtertrog nach einem oder mehreren der Ansprüche 25 bis 27,
**dadurch gekennzeichnet, dass**
der Fallrohraufnahmebereich (41) vier sich jeweils paarweise gegenüberliegende und im Wesentlichen vertikal erstreckende Aufnahmebereichwände (55a,55b,56a,56b) aufweist, von denen zweckmäßigerweise die beiden sich gegenüberliegenden Aufnahmebereichwände (55a,55b) ebenflächig und die beiden anderen Aufnahmebereichwände (56a,56b) zylinderrohrsegmentförmig ausgebildet sind.

29. Futtertrog nach Anspruch 28,
**dadurch gekennzeichnet, dass**
in den beiden ebenflächigen Aufnahmebereichwänden (55a,55b) eine durchgehende, zylindrische Fallrohraufnahmeöffnung (57) mit einer horizontalen Fallrohröffnungsmittelachse (58) vorgesehen ist, wobei die Fallrohraufnahmeöffnung (57) nach oben offen ausgebildet ist, wobei die Erstreckung in Umfangsrichtung der Fallrohraufnahmeöffnung (57) in den Aufnahmebereichwänden (55a,55b) vorzugsweise 200 bis 260 °, bevorzugt 220 bis 240 ° beträgt.

30. Futtertrog nach Anspruch 29,
**dadurch gekennzeichnet, dass**
die beiden ebenflächigen Aufnahmebereichwände (55a,55b) im Bereich der Fallrohraufnahmeöffnung (57) in Richtung einer vertikalen Fallrohrmittenquerebene (155) eingestülpt sind, so dass jeweils eine verbreiterte, zylindrische Fallrohrlauffläche (59) gebildet wird.

31. Futtertrog nach Anspruch 30,
**dadurch gekennzeichnet, dass**
in einem unteren Bereich (60) der Fallrohraufnahmeöffnung (57) an der Fallrohrlauffläche (59) und von dieser, im wesentlichen vertikal nach oben, weggerichtet der Mitnehmerzapfen (61) vorgesehen ist, wobei sich der Mitnehmerzapfen (61) sowohl in Umfangsrichtung der Fallrohraufnahmeöffnung (57) als auch in Richtung der Fallrohröffnungsmittelachse (58) erstreckt, wobei der Mitnehmerzapfen 61 vorzugsweise symmetrisch in Bezug zu einer vertikalen Fallrohrmittenlängsebene 156 angeordnet ist.

32. Futtertrog nach einem oder mehreren der Ansprüche 28 bis 31,
**dadurch gekennzeichnet, dass**
die Fallrohraufnahmeöffnung (57) zu der Deckelaussparung (45) gegenüberliegend angeordnet ist und die Deckelaussparung (45) und die Fallrohraufnahmeöffnung (57) die gemeinsame Schellenaufnahmeöffnung (125) für die Kupplungsschelle (4) bilden.

33. Futtertrog nach Anspruch 32,
**dadurch gekennzeichnet, dass**
die Schellenaufnahmeöffnung (125) zwei, zweckmäßigerweise geschlossene, Schellenlaufflächen (126) aufweist, auf denen die Kupplungsschelle (4) mit ihrer Schellenau-ßenwandung (121) gelagert ist, wobei die Kupplungsschelle (4) zweckmäßigerweise jeweils im Bereich des Axialsicherungsschlitzes (108) und des Kopplungsschlitzes (107) auf den Laufflächen (126) geführt ist.

34. Futtertrog nach einem oder mehreren der vorhergehenden Ansprüche,
**dadurch gekennzeichnet, dass**
für eine verzögerte Übertragung der Drehbewegung, die Kupplungsschelle (4) im Vergleich zur Einbauweise bei direkter Übertragung der Drehbewegung um 180° um die Futtertrogmittelachse (11) gedreht bzw. spiegelverkehrt in Bezug zu einer Schellenmittenquerebene (124) bzw. einer mit der Schellenmittenquerebene (124) zusammenfallenden Futtertrogmittenquerebene (159) angeordnet ist.

35. Futtertrog nach einem oder mehreren der Ansprüche 16 bis 34,
**dadurch gekennzeichnet, dass**
der Antriebsstutzen (92) in Richtung der Futterdurchgangsmittelachse (90) und von der Unterteilwandung (85) nach außen weg gerichtet ist und mit seiner Stutzenmittelachse (93) koaxial zur Futterdurchgangsöffnung (89) an einer Unterteilaußenwandung (91) angeformt ist, wobei eine Stutzenaußenwandung (94) vorzugsweise zylindrisch ist und eine Stutzeninnenwandung (95) zweckmäßigerweise einen konischen Verlauf hat, wobei der Innenradius der Stutzeninnenwandung (95) im Bereich der Futterdurchgangsöffnung (89) dem Radius der Futterdurchgangsöffnung (89) entspricht und mit wachsendem Abstand zur Unterteilaußenwandung (91) geringfügig zunimmt.

36. Futtertrog nach einem oder mehreren der Ansprüche 1 bis 35,
**dadurch gekennzeichnet, dass**
die Übertragung der Drehbewegung des Förderrohres (5) auf den Futtertrog (1) um 5 bis 35 °, bevorzugt 10 bis 25 ° verzögerbar ist.

## Claims

1. Poultry feeder for use in conjunction with a tubular feeding system which has a feed pipe (5) having a fodder admission opening (118), wherein the feeder has:
a) a plate-shaped floor pan (2),
b) a substantially tubular fodder-conducting device (3) disposed in relation to a vertical feeder centre axis (11) in the middle centrally above the floor pan (2),
c) a feed pipe receiving fixture (26), which upwardly adjoins the fodder-conducting device (3) in the vertical direction and has a receiving opening (125) and at least one transport means (61) for transmitting the rotary motion of the feed pipe (5) to the feeder (1), and
d) a coupling clamp (4), which is disposed within the receiving opening (125) and has at least one drive means (107, 108) corresponding to the transport means (61) and in which the feed pipe (5) is mounted in a non-displaceable and non-twistable manner such that the fodder admission opening (118) is disposed in the region of a fodder pass-through opening (89) of the coupling clamp (4).

2. Feeder according to Claim 1, **characterized in that** the coupling clamp (4) has a drive means (107), with which the rotary motion of the feed pipe (5) can be transmitted directly or without delay to the feeder (1).

3. Feeder according to Claim 2, **characterized in that** the directly transmitting drive means is a coupling slot (107) extending in a clamp wall (120) in the peripheral direction of the coupling clamp (4).

4. Feeder according to one or more of Claims 1 to 3, **characterized in that** the coupling clamp (4) has a drive means (108) with which the rotary motion of the feed pipe (5) can be transmitted with delay to the feeder (1).

5. Feeder according to Claim 4, **characterized in that** the delayed transmission drive means is a drive socket (92) extending away from the clamp wall (120).

6. Feeder according to one or more of the preceding claims, **characterized in that** the coupling clamp (4) is constructed in two parts and has a clamp bottom part (68) and a clamp closure part (69).

7. Feeder according to one or more of Claims 4 to 6, **characterized in that** the drive socket (92) is disposed with its socket centre axis (93) coaxial to a fodder pass-through centre axis (90) of the fodder pass-through opening (89).

8. Feeder according to one or more of Claims 4 to 6, **characterized in that** a socket outer wall (94) is cylindrical and a socket inner wall (95) preferably has a conical course.

9. Feeder according to one or more of the preceding claims, **characterized in that** the transport means is a driver pin (61) extending in the peripheral direction of the receiving opening (125) and in the direction of a receiving opening centre axis (125b).

10. Feeder according to Claim 9, **characterized in that** the extent of the coupling slot (107) in the peripheral direction corresponds to the extent of the driver pin (61) in the peripheral direction.

11. Feeder according to Claim 9 and/or 10, **characterized in that** the distance of a coupling slot bottom wall (114) from a coupling slot top wall (115) corresponds to the thickness of the driver pin (61).

12. Feeder according to one or more of Claims 9 to 11, **characterized in that**, for the direct transmission of the rotary motion of the feed pipe (5) to the feeder (1), the coupling slot (107) positively embraces the driver pin (61).

13. Feeder according to one or more of Claims 3 to 12, **characterized in that** the coupling clamp (4) has an axial locking slot (108) extending in the clamp wall (120) in the peripheral direction of the coupling clamp (4).

14. Feeder according to Claim 13, **characterized in that** the extent of the axial locking slot (108) in the peripheral direction is greater than the extent of the driver pin (61) in the peripheral direction.

15. Feeder according to Claim 13 and/or 14, **characterized in that** the distance of a locking slot bottom wall (111) of the axial locking slot (108) from a locking slot top wall (112) corresponds to the thickness of the driver pin (61).

16. Feeder according to one or more of Claims 13 to 15, **characterized in that** the clamp bottom part (68) has in a cylindrical bottom part wall (85) the coupling slot (107) extending in the peripheral direction and the axial locking slot (108) extending in the peripheral direction.

17. Feeder according to Claim 16, **characterized in that**, in relation to the drive socket (92), the coupling slot (107) is disposed on the side of a bottom part leading edge (88a) of the clamp bottom part (68) and the axial locking slot (108) is disposed on the side of a second bottom part leading edge (88b) of the clamp bottom part (68).

18. Feeder according to Claim 16 and/or 17, **characterized in that** the coupling slot (107) and the axial locking slot (108) are disposed symmetrically in relation to a bottom part central longitudinal plane (109), which is spanned by a bottom part cylindrical axis (86) and a socket centre axis (93).

19. Feeder according to one or more of Claims 16 to 18, **characterized in that** the coupling slot (107) and the axial locking slot (108) are disposed one opposite the other and symmetrically in relation to a bottom part central transverse plane (110), which runs perpendicular to the bottom part central longitudinal plane (109) and likewise contains the socket centre axis (93).

20. Feeder according to one or more of Claims 16 to 19, **characterized in that** onto a bottom part inner wall (96) of the bottom part wall (85) there is formed a cylindrical anti-twist collar (97) disposed coaxially to the fodder pass-through centre axis (90) and having an anti-twist end face (98).

21. Feeder according to Claim 20, **characterized in that** the outer radius of the anti-twist collar (97) corresponds to the radius of the fodder pass-through opening (89).

22. Feeder according to Claim 20 and/or 21, **characterized in that** the anti-twist end face (98) is configured in a cylindrical wall shape in such a way that the associated anti-twist end face cylindrical axis (99) corresponds to the bottom part cylindrical axis (86), the radius of the anti-twist end face (98) expediently corresponding to inner radius of the feed pipe (5).

23. Feeder according to one or more of Claims 20 to 22, **characterized in that** the feed pipe (5) is disposed on the clamp bottom part (68) in such a way that the bottom part cylindrical axis (86) and a feed pipe axis (117) coincide and the fodder admission opening (118) is disposed coaxially to or in alignment with the fodder pass-through opening (89) of the clamp bottom part (68), expediently the anti-twist collar (97) of the clamp bottom part (68) engaging positively in the fodder admission opening (118) of the feed pipe (5).

24. Feeder according to one or more of Claims 20 to 23, **characterized in that** the feed pipe (5) is mounted by means of the anti-twist collar (97) fixedly, i.e. in a non-displaceable and non-twistable manner, in the coupling clamp (4) and is connected to the latter.

25. Feeder according to one or more of the preceding claims, **characterized in that** the feed pipe receiving fixture (26) is of two-part design and has an upper receiving fixture cover (40) and a lower downpipe receiving region (41).

26. Feeder according to Claim 25, **characterized in that** the receiving fixture cover (40) essentially comprises a cover roof (42), which tapers to a vertical cover centre axis (152) corresponding to the feeder centre axis (11), and four cover walls (43a, 43b, 44a, 44b), which respectively lie opposite one another in pairs and extend substantially vertically, expediently the mutually opposing cover walls (43a, 43b) being of plane and preferably slotted configuration, so that they form double walls.

27. Feeder according to Claim 26, **characterized in that** the receiving fixture cover (40) has a cover recess (45) in the shape of a cylindrical pipe segment and having a cover recess axis (46) which extends continuously through the plane cover walls (43a, 43b), cylindrical cover running faces (153) being formed in the plane cover walls (43a, 43b) and the peripheral extent of the cover recess (45) in the cover walls (43a, 43b) expediently being less than 180°, preferably 100 to 160°, more preferably 120 to 140°.

28. Feeder according to one or more of claims 25 to 27, **characterized in that** the downpipe receiving region (41) has four receiving region walls (55a, 55b, 56a, 56b), which lie opposite one another in pairs and extend substantially vertically, of which, expediently, the two mutually opposing receiving wall regions (55a, 55b) are of plane configuration and the two other receiving region walls (56a, 56b) are configured in the shape of a cylindrical pipe segment.

29. Feeder according to Claim 28, **characterized in that** in the two plane receiving region walls (55a, 55b) there is provided a continuous, cylindrical downpipe receiving opening (57) having a horizontal downpipe opening centre axis (58), the downpipe receiving opening (57) being configured such that it is open in the upward direction, and the peripheral extent of the downpipe receiving opening (57) in the receiving region walls (55a, 55b) preferably amounting to 200 to 260°, more preferably 220 to 240°.

30. Feeder according to Claim 29, **characterized in that** the two plane receiving region walls (55a, 55b), in the region of the downpipe receiving opening (57), are turned inwards in the direction of a vertical downpipe central transverse plane (155), so that in each case a widened, cylindrical downpipe running surface (59) is formed.

31. Feeder according to Claim 30, **characterized in that** the driver pin (61) is provided in a lower region (60) of the downpipe receiving opening (57) on the downpipe running surface (59) such that it is directed substantially vertically upwards away from the latter, the driver pin (61) extending both in the peripheral direction of the downpipe receiving opening (57) and in the direction of the downpipe opening centre axis (58), and the driver pin (61) being disposed preferably symmetrically in relation to a vertical downpipe central longitudinal plane (156).

32. Feeder according to one or more of claims 28 to 31, **characterized in that** the downpipe receiving opening (57) is disposed opposite the cover recess (45), and the cover recess (45) and the downpipe receiving opening (57) form the joint clamp receiving opening (125) for the coupling clamp (4).

33. Feeder according to Claim 32, **characterized in that** the clamp receiving opening (125) has two, expediently closed, clamp running surfaces (126), on which the coupling clamp (4) is mounted with its clamp outer wall (121), the coupling clamp (4) expediently being guided on the running surfaces (126) respectively in the region of the axial locking slot (108) and of the coupling slot (107).

34. Feeder according to one or more of the preceding claims, **characterized in that**, for a delayed transmission of the rotary motion, the coupling clamp (4), in comparison to the installation layout in respect of direct transmission of the rotary motion, is disposed such that it is rotated through 180° about the feeder centre axis (11), or such that it is mirror-inverted in relation to a clamp central transverse plane (124) or to a feeder central transverse plane (159) coinciding with the clamp central transverse plane (124).

35. Feeder according to one or more of Claims 16 to 34, **characterized in that** the drive socket (92) is directed in the direction of the fodder pass-through centre axis (90) and outwards away from the bottom part wall (85) and, with its socket centre axis (93) coaxial to the fodder pass-through opening (89), is formed onto a bottom part outer wall (91), a socket outer wall (94) preferably being cylindrical and a socket inner wall (95) expediently having a conical course, and the inner radius of the socket (95), in the region of the fodder pass-through opening (89), corresponding to the radius of the fodder pass-through opening (89) and increasing slightly with growing distance to the bottom part outer wall (91).

36. Feeder according to one or more of Claims 1 to 35, **characterized in that** the transmission of the rotary motion of the feed pipe (5) to the feeder (1) can be delayed by 5 to 35°, preferably 10 to 25°.

## Revendications

1. Mangeoire pour volailles à utiliser en liaison avec un système de nourrissage à tuyaux comportant un tuyau de convoyage (5) pourvu d'un orifice de passage d'aliments (118), la mangeoire comprenant
a) une coupe de sol en forme d'assiette (2),
b) un dispositif conducteur d'aliments (3) sensiblement de forme tubulaire disposé au centre au dessus de la coupe de sol (2) par rapport à un axe médian vertical de la mangeoire (11),
c) un dispositif récepteur de tuyau de convoyage (26) raccordé vers le haut dans le sens vertical au dispositif conducteur d'aliments (3) et qui comprend un orifice récepteur (125) et au moins un moyen d'entraînement (61) pour transmettre le mouvement de rotation du tuyau de convoyage (5) à la mangeoire (1) et
d) un collier de couplage (4) disposé à l'intérieur de l'orifice récepteur (125) et comportant au moins un moyen moteur (107, 108) en correspondance avec le moyen d'entraînement (61) et dans lequel le tuyau de convoyage (5) s'appuie sans possibilité de déplacement ni de rotation de manière à ce que l'orifice de passage d'aliments (118) soit disposé au niveau d'un orifice de traversée d'aliments (89) du collier de couplage (4).

2. Mangeoire selon la revendication 1,
**caractérisée en ce que**
le collier de couplage (4) comporte un moyen moteur (107) qui permet de transmettre le mouvement de rotation du tuyau de convoyage (5) directement ou sans retard à la mangeoire (1).

3. Mangeoire selon la revendication 2,
**caractérisée en ce que**
le moyen moteur assurant la transmission directe est une fente de couplage (107) s'étendant dans une paroi de collier (120) dans le sens circonférentiel du collier de couplage (4).

4. Mangeoire selon l'une quelconque ou plusieurs des revendications 1 à 3,
**caractérisée en ce que**
le collier de couplage (4) comporte un moyen moteur (108) qui permet de transmettre le mouvement de rotation du tuyau de convoyage (5) avec un retard à la mangeoire (1).

5. Mangeoire selon la revendication 4,
**caractérisée en ce que**
le moyen moteur assurant la transmission avec un retard est une tubulure motrice (92) s'étendant depuis la paroi de collier (120).

6. Mangeoire selon l'une quelconque ou plusieurs des revendications précédentes,
**caractérisée en ce que**
le collier de couplage (4) est réalisé en deux pièces et comporte une pièce inférieure de collier (68) et une pièce de fermeture de collier (69).

7. Mangeoire selon l'une quelconque ou plusieurs des revendications 4 à 6,
**caractérisée en ce que**
la tubulure motrice (92) est disposée par son axe médian de tubulure (93) coaxialement par rapport à un axe médian de passage d'aliments (90) de l'orifice de traversée d'aliments (89).

8. Mangeoire selon l'une quelconque ou plusieurs des revendications 4 à 6,
**caractérisée en ce**
**qu'**une paroi extérieure de la tubulure (94) est cylindrique et qu'une paroi intérieure de la tubulure (95) a de préférence une extension conique.

9. Mangeoire selon l'une quelconque ou plusieurs des revendications précédentes,
**caractérisée en ce que**
le moyen d'entraînement est un tourillon d'entraînement (61) s'étendant dans le sens circonférentiel de l'orifice récepteur (125) et dans le sens d'un axe médian d'orifice récepteur (125b).

10. Mangeoire selon la revendication 9,
**caractérisée en ce que**
l'extension de la fente de couplage (107) équivaut dans le sens circonférentiel à l'extension du tourillon d'entraînement (61) dans le sens circonférentiel.

11. Mangeoire selon les revendications 9 et/ou 10,
**caractérisée en ce que**
la distance entre une paroi de fond de la fente de couplage (114) et une paroi de dessus de la fente de couplage (115) équivaut à l'épaisseur du tourillon d'entraînement (61).

12. Mangeoire selon l'une quelconque ou plusieurs des revendications 9 à 11,
**caractérisée en ce que**,
pour transmettre directement le mouvement de rotation du tuyau de convoyage (5) à la mangeoire (1), la fente de couplage (107) entoure le tourillon d'entraînement (61) en correspondance géométrique.

13. Mangeoire selon l'une quelconque ou plusieurs des revendications 3 à 12,
**caractérisée en ce que**
le collier de couplage (4) comporte une fente de blocage axial (108) s'étendant dans la paroi de collier (120) dans le sens circonférentiel du collier de couplage (4).

14. Mangeoire selon la revendication 13,
**caractérisée en ce que**
l'extension de la fente de blocage axial (108) dans le sens circonférentiel est supérieure à l'extension du tourillon d'entraînement (61) dans le sens circonférentiel.

15. Mangeoire selon les revendications 13 et/ou 14,
**caractérisée en ce que**
la distance entre une paroi de fond de fente de blocage (111) de la fente de blocage axial (108) et une paroi de dessus de fente de blocage (112) équivaut à l'épaisseur du tourillon d'entraînement (61).

16. Mangeoire selon l'une quelconque ou plusieurs des revendications 13 à 15,
**caractérisée en ce que**
la pièce inférieure du collier (68) comprend la fente de couplage (107) s'étendant dans le sens circonférentiel et la fente de blocage axial (108) s'étendant dans le sens circonférentiel dans une paroi de pièce inférieure en forme de tube cylindrique (85).

17. Mangeoire selon la revendication 16,
**caractérisée en ce que**
la fente de couplage (107) est disposée, par rapport à la tubulure motrice (92), sur le côté d'une arête frontale de pièce inférieure (88a) de la pièce inférieure du collier (68) et que la fente de blocage axial (108) est disposée sur le côté d'une deuxième arête frontale de pièce inférieure (88b) de la pièce inférieure du collier (68).

18. Mangeoire selon les revendications 16 et/ou 17,
**caractérisée en ce que**
la fente de couplage (107) et la fente de blocage axial (108) sont disposées symétriquement par rapport à un plan longitudinal médian de pièce inférieure (109) qui est sous-tendu par un axe de cylindre de pièce inférieure (86) et un axe médian de tubulure (93).

19. Mangeoire selon l'une quelconque ou plusieurs des revendications 16 à 18,
**caractérisée en ce que**
la fente de couplage (107) et la fente de blocage axial (108) sont disposées en se faisant face ou symétriquement par rapport à un plan transversal médian de pièce inférieure (110) qui est perpendiculaire au plan longitudinal médian de pièce inférieure (109) et contient également l'axe médian de tubulure (93).

20. Mangeoire selon l'une quelconque ou plusieurs des revendications 16 à 19,
**caractérisée en ce que**,
sur une paroi intérieure de pièce inférieure (96) de la paroi de pièce inférieure (85), est formée une collerette de blocage cylindrique anti-torsion (97) disposée coaxialement à l'axe médian de passage d'aliments (90) et comportant une surface frontale anti-torsion (98).

21. Mangeoire selon la revendication 20,
**caractérisée en ce que**
le rayon extérieur de la collerette anti-torsion (97) équivaut au rayon de l'orifice de traversée d'aliments (89).

22. Mangeoire selon les revendications 20 et/ou 21,
**caractérisée en ce que**
la surface frontale anti-torsion (98) est réalisée en forme de paroi cylindrique de manière à ce que l'axe de cylindre de surface frontale anti-torsion corrélatif (99) corresponde à l'axe de cylindre de pièce inférieure (86), le rayon de la surface frontale anti-torsion (98) étant judicieusement équivalent au rayon intérieur du tuyau de convoyage (5).

23. Mangeoire selon l'une quelconque ou plusieurs des revendications 20 à 22,
**caractérisée en ce que**
le tuyau de convoyage (5) est disposé sur la pièce inférieure de collier (68) de manière à ce que l'axe de cylindre de pièce inférieure (86) et un axe de tuyau de convoyage (117) coïncident et à ce que l'orifice de passage d'aliments (118) soit disposé coaxialement ou aligné par rapport à l'orifice de traversée d'aliments (89) de la pièce inférieure de collier (68), la collerette anti-torsion (97) de la pièce inférieure de collier (68) s'engrenant judicieusement en correspondance géométrique dans l'orifice de passage d'aliments (118) du tuyau de convoyage (5).

24. Mangeoire selon l'une quelconque ou plusieurs des revendications 20 à 23,
**caractérisée en ce que**
le tuyau de convoyage (5) s'appuie au moyen de la collerette anti-torsion (97) d'une manière fixe, donc sans possibilité de déplacement ni de rotation, dans le collier de couplage (4) et est rattaché à celui-ci.

25. Mangeoire selon l'une quelconque ou plusieurs des revendications précédentes,
**caractérisée en ce que**
le dispositif récepteur de tuyau de convoyage (26) est réalisé divisé en deux et comporte un couvercle supérieur de dispositif récepteur (40) et une zone inférieure réceptrice de tuyau de descente (41).

26. Mangeoire selon la revendication 25,
**caractérisée en ce que**
le couvercle du dispositif récepteur (40) est composé substantiellement d'un toit de couvercle vertical (42) dirigé vers l'axe médian de couvercle (152) correspondant à l'axe médian de la mangeoire (11) et de quatre parois de couvercle (43a, 43b, 44a, 44b) se faisant respectivement face par paires et s'étendant sensiblement à la verticale, les parois de couvercle (43a, 43b) se faisant face étant judicieusement réalisées avec une surface plane et de préférence une fente, de sorte qu'elles ont une conformation à double paroi.

27. Mangeoire selon la revendication 26,
**caractérisée en ce que**
le couvercle du dispositif récepteur (40) présente une échancrure de couvercle (45) en forme de segment tubulaire cylindrique ayant un axe d'échancrure de couvercle (46) qui s'étend en continu à travers les parois de couvercle à surface plane (43a, 43b), des surfaces cylindriques de roulement de couvercle (153) étant constituées dans les parois de couvercle à surface plane (43a, 43b) et l'extension dans le sens circonférentiel de l'échancrure de couvercle (45) dans les parois de couvercle (43a, 43b) étant judicieusement inférieure à 180°, de préférence entre 100 à 160° , préférentiellement entre 120 à 140°.

28. Mangeoire selon l'une quelconque ou plusieurs des revendications 25 à 27,
**caractérisée en ce que**
la zone réceptrice de tuyau de descente (41) comporte quatre parois de zone réceptrice (55a, 55b, 56a, 56b) se faisant respectivement face par paires et s'étendant sensiblement à la verticale dont les deux parois de zone réceptrice (55a, 55b) se faisant face sont judicieusement réalisées avec une surface plane et les deux autres parois de zone réceptrice (56a, 56b) sont réalisées en forme de segment tubulaire cylindrique.

29. Mangeoire selon la revendication 28,
**caractérisée en ce que**,
dans les deux parois de zone réceptrice à surface plane (55a, 55b), il est prévu un orifice récepteur cylindrique continu de tuyau de descente (57) ayant un axe médian horizontal d'orifice de tuyau de descente (58), l'orifice récepteur de tuyau de descente (57) étant réalisé ouvert vers le haut et l'extension dans le sens circonférentiel de l'orifice récepteur de tuyau de descente (57) étant comprise de préférence entre 200 et 260°, préférentiellement 220 et 240°, dans les parois de zone réceptrice (55a, 55b).

30. Mangeoire selon la revendication 29,
**caractérisée en ce que**
les deux parois de zone réceptrice à surface plane (55a, 55b) sont embouties par retournement au niveau de l'orifice récepteur de tuyau de descente (57) dans le sens d'un plan transversal médian vertical de tuyau de descente (155), de sorte qu'une surface de roulement cylindrique élargie de tuyau de descente (59) est respectivement constituée.

31. Mangeoire selon la revendication 30,
**caractérisée en ce que**,
dans une zone inférieure (60) de l'orifice récepteur de tuyau de descente (57), sur la surface de roulement de tuyau de descente (59) et en s'éloignant de celle-ci sensiblement à la verticale vers le haut, est prévu le tourillon d'entraînement (61), le tourillon d'entraînement (61) s'étendant aussi bien dans le sens circonférentiel de l'orifice récepteur de tuyau de descente (57) que dans le sens de l'axe médian d'orifice de tuyau de descente (58), le tourillon d'entraînement (61) étant disposé de préférence symétriquement par rapport à un plan longitudinal médian vertical de tuyau de descente (156).

32. Mangeoire selon l'une quelconque ou plusieurs des revendications 28 à 31,
**caractérisée en ce que**
l'orifice récepteur de tuyau de descente (57) est disposé en face de l'échancrure de couvercle (45) et **en ce que** l'échancrure de couvercle (45) et l'orifice récepteur de tuyau de descente (57) constituent l'orifice commun récepteur de collier (125) pour le collier de couplage (4).

33. Mangeoire selon la revendication 32,
**caractérisée en ce que**
l'orifice récepteur de collier (125) comporte deux surfaces de roulement de collier judicieusement fermées (126) sur lesquelles le collier de couplage (4) s'appuie par sa paroi extérieure de collier (121), le collier de couplage (4) étant judicieusement guidé respectivement au niveau de la fente de blocage axial (108) et de la fente de couplage (107) sur les surfaces de roulement (126).

34. Mangeoire selon l'une quelconque ou plusieurs des revendications précédentes,
**caractérisée en ce que**,
pour une transmission retardée du mouvement de rotation, le collier de couplage (4), comparativement au mode de montage en cas de transmission directe du mouvement de rotation, est tourné de 180° autour de l'axe médian de la mangeoire (11) ou disposé en miroir inversé par rapport à un plan transversal médian de collier (124) ou à un plan transversal médian de mangeoire (159) coïncidant avec le plan transversal médian de collier (124).

35. Mangeoire selon l'une quelconque ou plusieurs des revendications 16 à 34,
**caractérisée en ce que**
la tubulure motrice (92) est dirigée en direction de l'axe médian de passage d'aliments (90) et vers l'extérieur en partant de la paroi de pièce inférieure (85) et est formée avec son axe médian de tubulure (93) coaxialement à l'orifice de traversée d'aliments (89) sur une paroi extérieure de pièce inférieure (91), une paroi extérieure de tubulure (94) étant de préférence cylindrique et une paroi intérieure de tubulure (95) ayant judicieusement une extension conique, le rayon intérieur de la paroi intérieure de tubulure (95) équivalant, au niveau de l'orifice de traversée d'aliments (89), au rayon de l'orifice de traversée d'aliments (89) et augmentant légèrement au fur et à mesure que la distance par rapport à la paroi extérieure de pièce inférieure (91) s'accroît.

36. Mangeoire selon l'une quelconque ou plusieurs des revendications 1 à 35,
**caractérisée en ce que**
la transmission du mouvement de rotation du tuyau de convoyage (5) à la mangeoire (1) peut être décalée de 5 à 35°, de préférence 10 à 25°.
